Europäisches Patentamt

European Patent Office

Office européen des brevets

(19)

(11) **EP 1 477 839 A2**

(12) **EUROPÄISCHE PATENTANMELDUNG**

(43) Veröffentlichungstag:
    **17.11.2004 Patentblatt 2004/47**

(51) Int Cl.⁷: **G02B 26/02**

(21) Anmeldenummer: **04017369.2**

(22) Anmeldetag: **09.03.1999**

(84) Benannte Vertragsstaaten:
    **DE FR GB**

(30) Priorität: **09.03.1998 DE 19809975**
                **10.08.1998 DE 29814622 U**

(62) Dokumentnummer(n) der früheren Anmeldung(en)
    nach Art. 76 EPÜ:
    **99915553.4 / 1 062 537**

(71) Anmelder: **Bartels Mikrotechnik GmbH**
    **44227 Dortmund (DE)**

(72) Erfinder: **Bartels, Frank, Dr.**
    **44227 Dortmund (DE)**

(74) Vertreter: **Pätzold, Herbert, Dr.-Ing.**
    **Steubstrasse 10**
    **82166 Gräfelfing (DE)**

Bemerkungen:
    Diese Anmeldung ist am 22- 07 - 2004 als
    Teilanmeldung zu der unter INID-Kode 62
    erwähnten Anmeldung eingereicht worden.

(54) **Steuerbare Fresnellinsenanordnung**

(57)    Eine Fresnellinsenanordnung besteht aus einem Grundkörper (2) mit einem Hohlraum (20). Eine Flüssigkeit wird zwischen zwei Abschnitten (201,202) des Hohlraums hin und her befördert. Der Grundkörper und die Flüssigkeit haben denselben Brechungsindex. In einer der Seitenwände (22) des Hohlraums ist eine Fresnel-Linsen-Struktur (202) ausgebildet, so dass wenn die Flüssigkeit in den Abschnitt (202) eingebracht ist, das Licht die Gesamtanordnung, die wie eine dicke homogene Platte wirkt, durchtritt. Wenn die Flüssigkeit in den anderen Abschnitt (201) zurückgeführt wird, wird das Licht durch die Fresnel-Linsen-Struktur moduliert.

Fig. 2a

Fig. 2b

**Beschreibung**

Im allgemeinen werden mit optischen Bauelementen eine Vielfalt von veränderlichen optischen Funktionen realisiert. Ein Beispiel sind optische Isolatoren in Chip-Bauweise, die für Lichtstrahlen nur in eine Richtung durchlässig sind. Relativ häufig werden mittels optischen Bauelementen Lichtstrahlen derart gesteuert, daß sie in einem Winkel abgelenkt werden. So existieren optische Scanner, bei denen Lichtstrahlen durch rotierende Spiegel über einer Fläche abgeleitet werden können. Ein weiteres Beispiel sind optische Relaisschaltungen, die es ermöglichen, den Weg des Lichtes in einer Polymer- oder Glasfaser wahlweise in verschiedene Zweige einzukoppeln.

Derartige herkömmliche optische Bauelemente werden bislang entweder durch mechanische/mikromechanische Elemente (kippbare Spiegel oder bewegte Linsen/Strahlteiler etc.) oder durch die Verwendung von elektrisch, magnetisch oder thermisch steuerbaren optischen Materialien realisiert.

Die vorstehenden herkömmlichen mechanischen Ausführungen sind jedoch aufgrund ihrer Komplexität insbesondere miniaturisiert nur äußerst schwierig herzustellen, und daher sehr teuer und auch bei einer miniaturisierten Ausführung unbefriedigend hoch im Energieverbrauch. Bei der Verwendung von beispielsweise kippbaren Spiegeln ist außerdem der maximale Ablenkwinkel des zu steuernden Lichtstrahls in herkömmlichen optischen Bauelementen auf unter 30° begrenzt.

Die Verwendung von elektrisch, magnetisch oder thermisch steuerbaren optischen Substanzen erfordert eine geeignete Auswahl von sehr speziellen und sehr teuren Materialien, weshalb derartige herkömmliche optische Bauelemente unerwünscht teuer sind. Außerdem sind derartige zur optischen Steuerung geeignete Materialien nur begrenzt temperaturstabil und damit unzuverlässig in ihrer Funktionsweise.

Angesichts der vorstehenden Nachteile des Standes der Technik, hat die vorliegende Erfindung die Aufgabe, optische Bauelemente bereitzustellen, die geeignet sind, Lichtstrahlen zu steuern und einfach und billig auch in Massenproduktion und miniaturisiert herstellbar sind, und für einen beliebigen Ablenkwinkel von Lichtstrahlen ausgebildet werden können.

Die vorstehende Aufgabe wird erfindungsgemäß mit den Merkmalen des unabhängigen Anspruchs 1 gelöst. Vorteilhafte Ausführungen der vorliegenden Erfindung ergeben sich ohne jede Beschränkung aus den Merkmalen der Unteransprüche und/oder der nachfolgenden Beschreibung, die von schematischen Zeichnungen begleitet ist. Hierzu zeigt:

Figuren 1a) und b)     eine erste Ausführung der vorliegenden Erfindung;

Figuren 2a) und b)     eine zweite Ausführung der vorliegenden Erfindung;

Figuren 3a) und b)     eine dritte Ausführung der vorliegenden Erfindung;

Figuren 4a) und b)     eine vierte Ausführung der vorliegenden Erfindung.

Figuren 5a) und b)     eine fünfte Ausführung der vorliegenden Erfindung mit zwei Kammem und einem Kanal;

Figuren 6a) und b)     eine sechste Ausführung der vorliegenden Erfindung mit vier Kammern und zwei Kanälen;

Figuren 7a) und b)     eine siebte Ausführung der vorliegenden Erfindung mit einem sich verzweigenden Lichtwellenleiter und zwei Kammem und einem Kanal;

Figuren 7c) und d)     einen Schnitt entlang der Linie A-A in Fig. a) bzw. b);

Figur 7e)     eine Modifikation der siebten Ausführung der vorliegenden Erfindung mit drei Kammem.

Figur 8a und b     eine achte Ausführung der vorliegenden Erfindung (eine Modifikation der fünften, sechsten und siebten Ausführung der Erfindung);

Figur 9     eine neunte Ausführung der vorliegenden Erfindung (eine Modifikation der sechsten Ausführung der Erfindung);

Figur 10a und b     eine zehnte Ausführung der vorliegenden Erfindung (Abwandlungen der achten Ausführung von Fig. 8);

Fig. 11     eine elfte Ausführung der vorliegenden Erfindung (eine weitere Abwandlung der achten Ausführung);

Fig. 12      eine zwölfte Ausführung der vorliegenden Erfindung (eine Abwandlung der elften Ausführung);

Fig. 13      ein erfindungsgemäßes optisches System bestehend aus Schaltungs-Bauelementen, jeweils ausgebildet zur Ausführung einer logischen Schaltoperation und außerdem bestehend aus monofunktionalen Bauelementen;

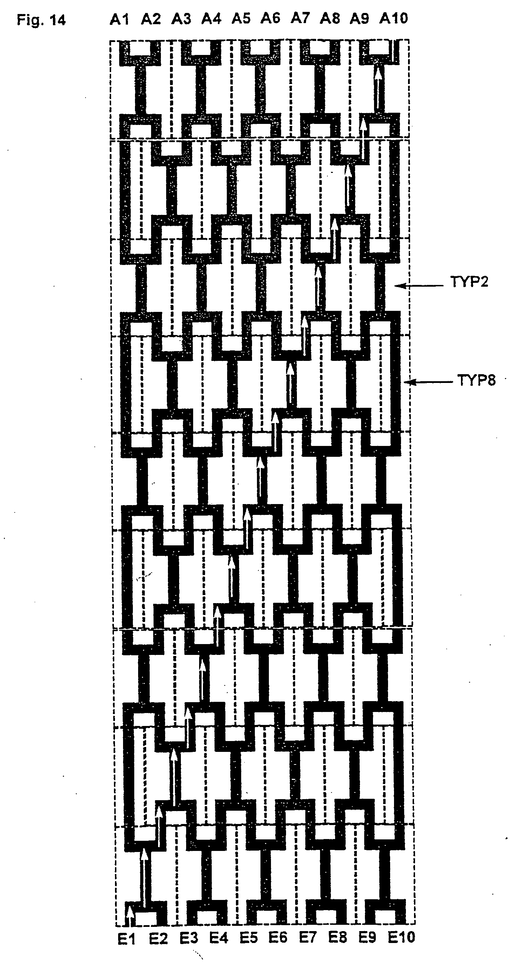

Fig. 14      eine beispielhafte Schaltungsanordnung, bereitgestellt, mit Bauelementen, des Systems von Fig. 13;

Erste Ausführung:

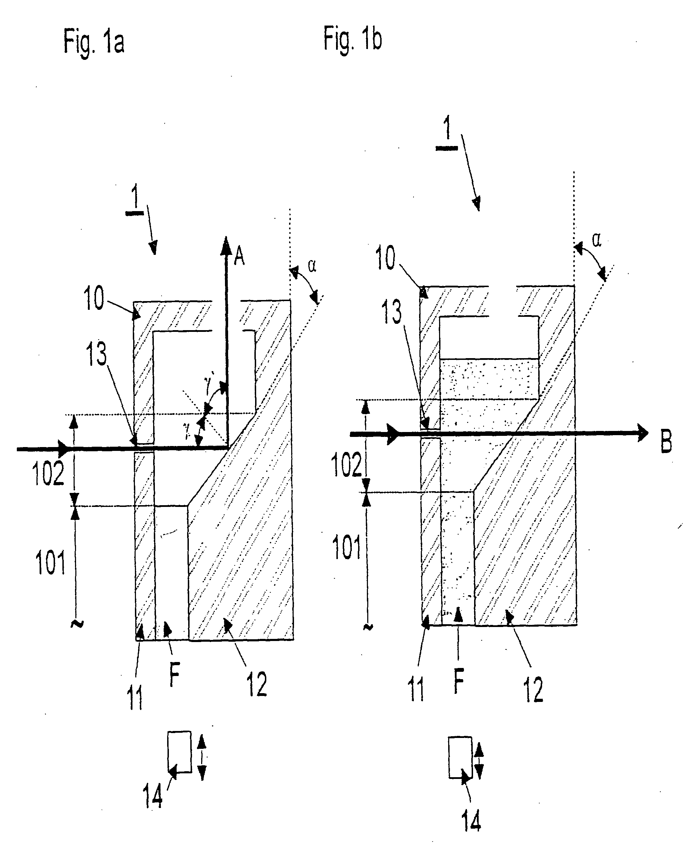

Fig. 1 zeigt ein erstes vorteilhaftes Ausfuhrungsbeispiel der vorliegenden Erfindung anhand dessen die vorliegende Erfindung beispielhaft schematisch erläutert wird.

Fig. 1 zeigt einen Längsschnitt durch einen Kunststoffkörper eines optischen Bauelementes 1, in dem ein innerer Hohlraum 10 ausgebildet ist. Der Hohlraum besteht in seinen für die Erfindung wesechen Abschnitten in einem ersten Abschnitt 101 und einem zweiten Abschnitt 102. Der Hohlraum 10 hat außerdem eine erste 11 und zweite 12 gegenübenlegende Seitenwand, die den ersten 101 und zweiten 102 Abschnitt seitlich begrenz.

Der erste Abschnitt 101 des Hohlraum 10 dient als Reservoir für eine Flüssigkeit F, die in den Hohlraum eingebracht ist, und diesen teilweise ausfüllt.

Der an den ersten Abschnitt 101 angrerzende zweite Abschnitt 102 des Hohlraums 10 hat wie der erste Abschnitt 101 die gegenübenlegenden Seitenwände 11 und 12, wobei die Seitenwand 12 in dem Bereich des zweiten Abschnitts 102 des Hohlraums in einem ersten Winkel $\alpha$ zur Seitenwand 11 ausgebildet ist.

In der ersten Seitenwand 11 ist in einem Winkel $\beta$ zur ersten Seitenwand eine Faserführungsgrube 13 ausgebildet durch die eine lichtleitende Faser derart eingeführt ist, daß Licht durch die lichtleitende Faser auf die Seitenwand 12 geleitet wird. Wenn nun durch die lichtleitende Faser geleitetes Licht auf die Seitenwand 12 gelenkt wird, fällt das Licht entsprechend der gewähtten Winkel $\alpha$ und $\beta$ in einem Einfallswinkel $\gamma$ auf die Seitenwand 12 und wird von der Seitenwand 12 in einem Winkel $\gamma'$ reflektiert. Durch entsprechende Ausbildung der Seitenwände 11 und 12 in ihrer Winkelposition $\alpha$ zueinander und durch entsprechendes Einbringen der Faserführungsgrube in einem vorbestimmten Winkel $\beta$ kann daher das an der Seitenwand 12 reflektierte Licht in eine beliebige Richtung abgelenkt werden. Bei der in Fig. 1 dargestellten Ausführung wurde beispielhaft $\alpha = 45°$, $\beta = 90°$ gewählt, so daß das Licht um 90° gegenüber der in der Faserführungsgrube eingelegten lichtleitenden Faser abgelenkt wird, solange in dem Abschnitt 102 keine Flüssigkeit ist. Durch geeignete Auswahl der jeweiligen vorstehenden vorbestimmten Winkel sind dabei beliebige Variationen von Ablenkwinkeln möglich.

In dem erfindungsgemäßen optischen Bauelement 1 sind außerdem Mittel zum Verlagern der Flüssigkeit von dem ersten Abschnitt 101, in den zweiten Abschnitt 102 vorgesehen. Wenn die Flüssigkeit, die einen deutlich anderen Brechungsindex aufweist, als die bislang im Abschnitt 102 befindliche Luft, in den Abschnitt 102 eingebracht wird, so daß der Lichtstrahl durch die Flüssigkeit auf die Seitenwand 12 innerhalb des Abschnitts 102 gelenkt wird, ändert sich das Verhalten an der Grenzfläche aufgrund der verschiedenen Brechungsindizes von Luft und der Flüssigkeit.

Erfindungsgemäß sind in der ersten erfindungsgemäßen Ausführung das die Kunststoffplatte 1 bildende Material und die Flüssigkeit derart ausgewählt, daß sie einen im wesentlichen identischen Brechungsindex haben.

In diesem Fall der im wesentlichen identischen Brechungsindizes von Flüssigkeit und Kunststoffplatte geht daher der durch die Flüssigkeit in Abschnitt 102 tretende Strahl unabgelenkt durch die Grenzfläche, und ändert seine Richtung nicht, wie in Fig. 1b dargestellt ist.

Durch wahlweises Einbringen und Entfemen der Flüssigkeit aus dem Bereich des Lichtstrahls in dem Abschnitt 102 des Hohlraums 10 kann daher bei geeigneter Ausbildung der Geometrie der Grenzfläche, der Seitenwand und der Führungsgrube zwischen beliebigen vorbestimmten Richtungen des Lichts geschaltet werden.

Dabei kommen als Mittel zum Verändern der Position der Flüssigkeit innerhalb des Hohlraums 10 insbesondere bekannte piezoangetriebene Aktoren 14 in Betracht.

Besondere Vorteile der fluidischen Steuerung von Lichtstrahlen in miniaturisierten optischen Bauelementen ergeben sich durch deren miniaturisiertem Aufbau, da dann die zu bewegenden Flüssigkeitsmengen naturgemäß sehr klein gehalten werden können. Außerdem sind bei den in der Mikrofluidik verfügbaren Aktoren auch vorteilhaft hohe Schaltfrequenzen verfügbar. Die vorstehenden Hohlraume 10, 101, 102 sind durch mikrotechnische Verfahren miniaturisiert als Kanäle ausbildbar und daher das erfindungsgemäße optische Bauelement 1 sehr kostengünstig in großen Stückzahlen zu fertigen.

Zweite Ausführung

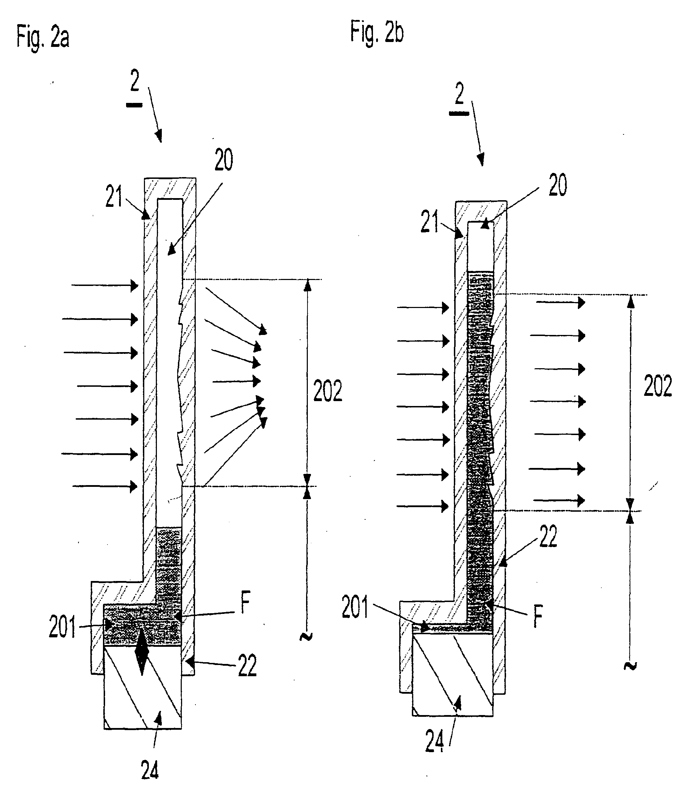

Fig. 2 zeigt das optische Bauelement 2 mit einer steuerbaren Frenellinsenanordnung 2 als zweite Ausführung der vorliegenden Erfindung im Längsschnitt. Der längliche Hohlraum 20 innerhalb des aus Kunststoff gebildeten optischen Bauelementes 2 wird im wesentlichen von den beiden gegenüberliegenden im wesentlichen parallelen Seitenwänden 21 und 22 begrenzt Erfindungsgemäß ist in der Seitenwand 22 des Hohlraums 20 in dem Abschnitt 202 eine Frenellinsenstruktur ausgebildet. Das eine Ende des länglichen Hohlraums 20 mündet in einem in seinem Längsschnitt vergrößerten Hohlraum 201, der als Reservoir für eine Flüssigkeit mit geeignetem Brechungsindex dient Der Hohlraum 201 wird an seinem anderen Ende von einem Mittel 14 zur Beförderung der Flüssigkeit von dem Abschnitt 201 in den Abschnitt 202 des Hohlraums 20 abgeschlossen, das derart ausgebildet ist, Flüssigkeit F von dem Abschnitt 201 in den Abschnitt 202 zu befördern und die Flüssigkeit aus dem Abschnitt 202 wieder zurück in den Abschnitt 201 zu befördern. Das Mittel zur Beförderung ist vorteilhaft ein Piezo-Aktor 24.

Hohlraum 202, Hohlraum 201 und Piezo-Aktor 24 sind dabei erfindungsgemäß derart dimensioniert, daß die Flüssigkeit F zusammen mit der entsprechenden Ausbildung der beiden Hohlräume 202 und 201 als fluidischer Wegverstärker des Piezo-Aktors fungiert.

Mit geeigneter Materialauswahl des Kunststoffkörpers des Bauelements 2 und der Flüssigkeit F wird erfindungsgemäß erreicht, daß der Kunststoffkörper 2 und die Flüssigkeit F im wesentlichen denselben Brechungsindex haben. Wenn nun die Flüssigkeit F in den Abschnitt 202 des Hohlraums 20 eingebracht ist, wie in Fig. 2b dargestellt ist, ist die Frenellinsenstruktur nicht mehr existent und das Licht durchtritt die Gesamtanordnung wie eine dicke homogene Platte.

Wenn die Flüssigkeit F aus dem Bereich 202 entfernt ist wie in Fig. 2a) dargestellt ist, wird das Licht durch die Linse in der Seitenwand 22 modelliert. Es ist klar, daß auch die zweite Ausführung der vorliegenden Erfindung hochfrequent zwischen den beiden Schaltungsanordnungen von Fig. 2a und 2b geschaltet werden kann.

Dritte Ausführung:

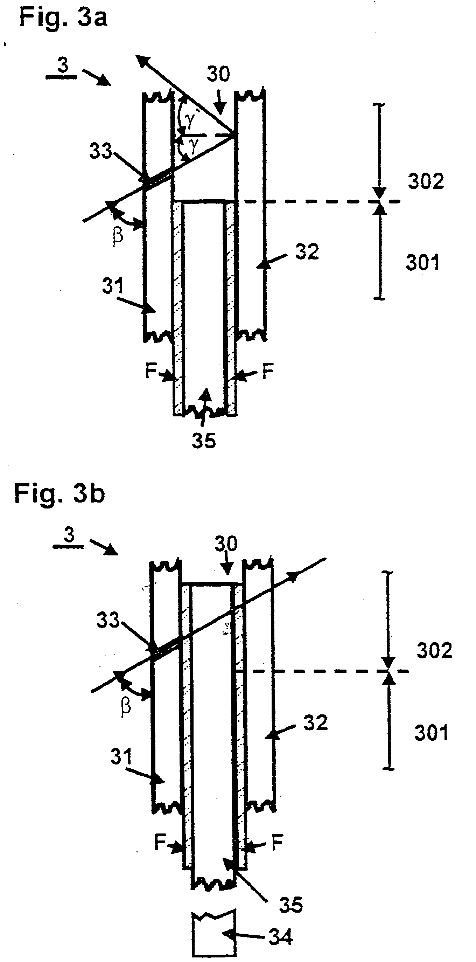

Fig. 3a und b zeigen die dritte Ausführung der vorliegengen Erfindung, die eine Modifikation der ersten Ausführung ist.

Die dritte Ausführung des erfindungsgemäßen optischen Bauelements 3 besteht aus dem Kunststoffkörper 3, mit dem Hohlraum 30, der im wesentlichen von den beiden gegenüberliegenden Seitenwänden 31 und 22 gebildet ist. Erfindungsgemäß sind hier die beiden Seitenwande 31 und 32 parallel angeordnet, so daß der Hohlraum 30 länglich ausgebildet ist. Eine Faserführungsgrube 33 ist hier in einem Winkel β von 45° in die erste Seitenwand 31 eingelassen und bestimmt die Richtung einer lichtleitenden Faser, wie bei der ersten Ausführung.

Der Hohlraum 30 besteht aus einem ersten Abschnitt 301, in dem ein Kunststoffstab 35 desselben Materials wie des Kunstoffkörpers 3 angeordnet ist. Der Kunststoffstab 35 ist in seinen Abmessungen derart an den Hohlraum 30 angepaßt, daß er innerhalb des Hohlraums 30 verschiebbar ist und den Abschnitt 301 des Hohlraums möglichst ausfüllt.

Erfindungsgemäß ist zwischen den Innenseiten der Seitenwände 31 und 32 ein Flüssigkeitsfilm F eingebracht, dessen Brechungsindex mit dem Brechungsindex des ausgewählten Materials des Kunststoffkörpers 3 im wesentlichen identisch ist. Wird nun der Kunststoffstab 35 mit dem Flüssigkeitsfilm F von dem ersten Abschnitt 301 in den zweiten Abschnitt 302 eingebracht, wird der auf die Seitenwand in einem Winkel γ einfallende Lichtstrahl nicht mehr wie in Fig. 3a an der Seitenwand 32 in dem Winkel γ reflektiert, sondern durchtritt den Flüssigkeitsfilm F, den Kunststoffstab 34, und die Seitenwand 32 wie eine dicke homogene Platte. Als Antriebsmittel des Kunststoffstabes 35 dienen wie bei der ersten und zweiten Ausführung beispielsweise Piezo-Aktoren 34, so daß auch die dritte Ausführung hochfrequent geschaltet werden kann.

Im Vergleich mit der ersten Ausführung der vorliegenden Erfindung ist klar, daß bei der dritten Ausführung auch der mittlere Kunststoffstab 35 durch Flüssigkeit ersetzt werden kann, und dann die dritte Ausführung eine Modifikation der ersten Ausführung mit veränderten Winkelverhältnissen darstellt. Außerdem ist klar, daß auch hier die relative Winkelposition der Faserführungsgrube 33 und der beiden Seitenwände 31 und 32 vielfach variiert werden können.

Vierte Ausführung:

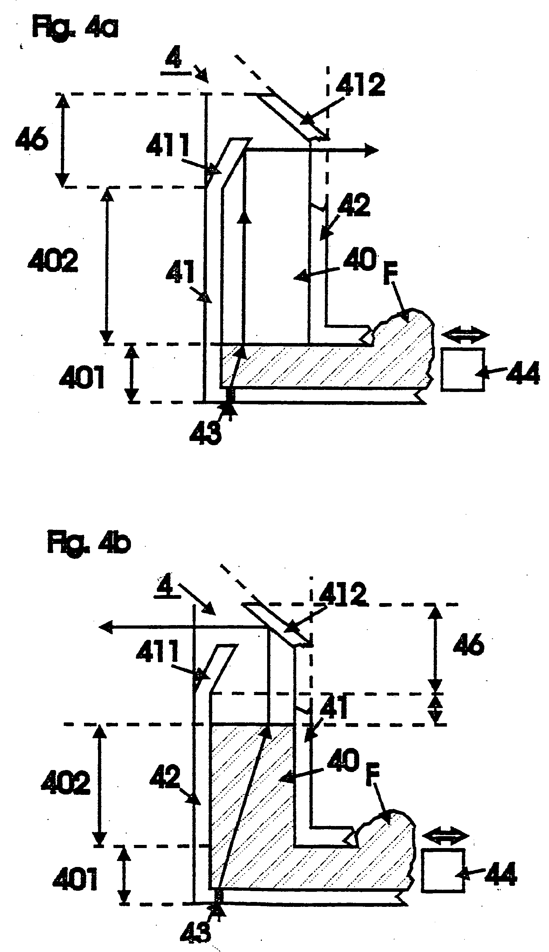

Fig. 4a und b zeigen eine vierte Ausführung der vorliegenden Erfindung mit dem optischen Bauelement 4 bestehend aus dem Kunststoffkörper 4, in dem der Hohlraum 40 mit einem ersten Abschnitt 401 und einen zweiten Abschnitt 402 ausgebildet ist. Der erste Abschnitt 401 dient als Reservoir für eine Flüssigkeit F, die mittels beispielsweise Piezo-Aktoren 44 von dem ersten Abschnitt 401 in den zweiten Abschnitt 402 befördert werden kann, und wieder aus dem zweiten Abschnitt 402 entfernt werden kann.

Der Hohlraum 40 besteht im wesentlichen aus den beiden gegenüberliegenden Seitenwänden 41 und 42, wobei an dem einen Ende der Seitenwände eine Strahlumlenkeinrichtung 46 angeordnet ist und gegenüber der Strahlenumlenkeinrichtung eine Faserführungsgrube 43 parallel zu den Seitenwänden 41 und 42 in den Abschnitt 401 des Hohlraums eingelassen ist. Die Strahlumlenkeinrichtung 46 wird durch gegenüber den beiden seitlichen Wänden 41 und 42 jeweils in verschiedenen Winkeln abgewinkelte Fortsetzungen 411 und 412 der Seitenwände bereitgestellt. Die Flüssigkeit F ist bei der vierten Ausführung der vorliegenden Erfindung derart ausgewählt, daß sie einen Brechungsindex aufweist, der geeignet ist, den Lichtstrahl je nach Lage der Flüssigkeit F in dem Hohlraum 40 auf die Fortsetzung 411 bzw. auf die Fortsetzung 422 zu lenken.

Fig. 4a zeigt die Flüssigkeit in dem Abschnitt 401. Der Lichtstrahl durchtritt hier die Flüssigkeit F des Abschnitts 401, wird von dieser entsprechend ihrem Brechungsindex leicht abgelenkt und durchtritt daraufhin die Luft des Abschnitts 402 und wird von der Fortsetzung 411 der Strahlumlenkeinrichtung 46 abgelenkt.

Fig. 4b zeigt die Flüssigkeit F, die nunmehr mittels beispielsweise Piezo-Aktoren aus einem Flüssigkeitsreservoir, das wie bei der dritten Ausführung als Wegverstärkermittel ausgebildet sein kann, nicht nur Abschnitt 401, sondern auch den Abschnitt 402 ganz oder teilweise ausfüllt. Das von der in der Faserführungsgrube 33 eingelegten Lichtleiterfaser eingeleitete Licht durchtritt nun die Flüssigkeit F durch eine entsprechend weitere Wegstrecke und wird dementsprechend weiter abgelenkt; weshalb das Licht nunmehr von der Fortsetzung 422 der Strahlumlenkeinrichtung 46 in eine zweite Richtung abgelenkt wird. Durch geeignete Auswahl der Materialien für den Kunststoff und die Flüssigkeit F und der Geometrie des Hohlraums und der Strahlumlenkeinrichtung lassen sich beliebige Winkelablenkungen auch hochfrequent wie bei Ausführung 1 bis 3 schalten.

Erfindungsgemäß können die Hohlräume 10, 20, 30 und 40 miniaturisiert als schmale Kanäle ausgebildet sein, wobei die Abstände der Seitenwände 11, 12; 21, 22; 31, 32; 41, 42 im Bereich von 100 μm liegen können.

Das Material für den Kunststoffkörper kann beispielsweise aus PE, PP, PS, PC und PMMA ausgewählt werden.

Die Fig. 1 bis 4 zeigen jeweils Längsschnitte der für die Erfindung wesentlichen Teile der optischen Bauelemente 1, 2, 3 und 4 und es ist klar, daß die Kunststoffkörper der Bauelemente eine nicht gezeigte Bodenplatte und Abdeckung haben. Die ebenfalls nicht gezeigte Höhe liegt in der Größenordnung des Abstandes der jeweiligen Seitenwände, so daß die Hohlräume 10, 20, 30, 40 jeweils einen rechtwinkligen oder quadratischen Querschnitt haben können.

Die in den Ausführungsbeispielen 1- 4 jeweils aufgezeigte Geometrie ist beispielhaft und beliebig modifizierbar . Grundlegender Gedanke der vorliegenden Erfindung ist die Verwendung von Flüssigkeiten mit geeignetem Brechungsindex in optischen Bauelementen zur Steuerung von Lichtstrahlen.

Erfindungsgemäß ist die Flüssigkeit F bei der Herstellung in die optischen Bauelemente 1, 2, 3, 4 eingebracht und innerhalb der Bauelemente in ihrer Position verlagerbar angeordnet, wodurch Lichtstrahlen gesteuert werden können. Die Flüssigkeit F ist daher Bestandteil des Bauelements.

Dabei werden Mittel bereitgestellt, die Lage der Flüssigkeit in kanalartigen Hohlräumen zu verändern, so daß das Licht wahlweise durch die Flüssigkeit geleitet werden kann. Durch geeignete Auswahl des Brechungsindex der Flüssigkeit im Verhältnis zu dem Brechungsindex des Kunststoffs des Bauelements lassen sich beispielhaft die vorstehenden Ausführungsbeispiele 1 - 4 ausbilden.

Es ist außerdem klar, daß neben dem Brechungsindex die Oberflächenspannung der Flüssigkeit sowie Kapillareffekte der Hohlräume bei der Materialauswahl von Flüssigkeit und Kunststoff des optischen Bauelements berücksichtigt sind.

Die Erfindung ist in keiner Weise auf die vorstehenden Ausführungsbeispiele beschränkt und kann vom Fachmann in vielfältiger Art und Weise modifiziert werden.

Besondere Vorteile durch die vorliegende Erfindung werden erreicht, indem auf einfache Art und Weise ermöglicht wird, Lichtstrahlen in miniaturisierten optischen Bauelementen um einen unbegrenzten Winkelbereich abzulenken. Die in der Mikrofluidik verfügbaren Aktoren lassen außerdem hohe Schaltfrequenzen erzielen und die fluidischen Kanäle/Hohlräume sind mit mikrotechnischen Verfahren sehr kostengünstig herzustellen und in großen Stückzahlen zu fertigen.

Nachstehend werden die vorteilhaften Ausführungen fünf bis sieben der vorliegenden Erfindung detailliert beschrieben. Den Ausführungen eins bis sieben liegt der gemeinsame Erfindungsgedanke zugrunde, in einem Grundkörper einen Lichtwellenleiter mit einem Lichteingang und mindestens zwei Lichtausgängen vorzusehen. Dabei ist der erfindungsgemäße Grundkörper derart strukturiert, daß das durch den Lichteingang einfallende Licht entlang einem ersten Weg zu einem erstes Lichtausgang geleitet wird oder entlang einem zweiten Weg zu einem zweiten Lichtausgang geleitet wird und zwischen den beiden Lichtwegen auch hochfrequent geschaltet werden kann. Dies wird dadurch erreicht, daß der erste und zweite Lichtweg durch mindestens einen geeignet ausgebildeten Kanal getrennt sind, der in dem Grundkörper zwei geeignet ausgebildete Hohlräume miteinander verbindet.

Die Lichtwege haben jeweils einen vorbestimmten definierten Brechungsindex. Der Grundkörper kann, wie z.B. bei den Ausführungen 5 und 6 aus einem Material bestehen, das im wesentlichen den gleichen Brechungsindex hat, der mit dem Brechungsindex der Lichtwege im wesentlichen identisch ist, wobei die Lichtwege durch zwei gegenüberliegende Gräben in dem Grundkörper ausgebildet sind, und der Grundkörper kann aus beispielsweise einem geeigneten Kunststoff, einen geeignetem Glas oder aus Silizium bestehen.

Der Grundkörper kann auch aus einem Material bestehen, das einen Brechungsindex hat, der von dem Brechungsindex der Lichtwege deutlich verschieden ist (z.B. Ausführung 7) und die Lichtwege können lichtleitende Fasem sein, die in dem Grundkörper angeordnet sind.

In das Kanalsystem bestehend aus den Kanälen und Hohlräumen ist teilweise ein Medium von geeignetem Brechungsindex verschiebbar eingebracht. Das Medium kann ein geeignetes Gas oder vorteilhaft eine geeignete Flüssigkeit sein. An mindestens einen der Hohlräume ist ein Mittel zur Verlagerung des Mediums innerhalb der Kanäle vorgesehen, so daß das Medium wahlweise innerhalb des ersten oder zweiten Lichtwegs angeordnet ist. Die Hohlräume haben vorteilhaft einen Querschnitt der gegenüber dem Querschnitt der Kanäle groß ist, und vorteilhaft ein Volumen, das gegenüber dem Volumen der Kanäle groß ist.

Als Mittel zur Verlagerung des Mediums kommen vorteilhaft piezoelektrische Aktoren in Betracht, die auch hochfrequent geschaltet werden können. Beispielsweise sind auf dem Markt Piezoaktoren erhältlich, die bei Spannungen von 12V Verbiegungen von 1-2 μm erreichen.

Bei einem Aktordurchmesser von 8 mm sind damit in einem Flüssigkeitskanal von beispielsweise 50 μm * 50 μm Verlagerungen einer Flüssigkeitsfront von 20 mm möglich.

Erfindungsgemäß wird das optische Bauelement der vorliegenden Erfindung, das ein optischer Schalter sein kann, mit mikrotechnischen Verfahren hergestellt, die geeignet sind, Strukturen mit einem Querschnitt in einer Größenordnung von 10 μm x 10μm bis 100 μm x 100 μm bereitzustellen.

Daher ist das erfindungsgemäße Bauelement/der optische Schalter vorteilhaft in einer im wesentlichen zweidimensionalen Struktur ausgebildet.

Erfindungsgemäß können anstelle der piezoelektrischen Aktoren jedoch auch thermische Aktoren mit thermoplastischem Antrieb oder Memorymetallantriebe in den nachstehenden Ausführungen fünf bis sieben wie auch in den vorstehenden Ausführungen 1 bis 4 angeordnet sein.

Es ist klar, daß auch mehrere derartiger Anordnungen in einem Grundkörper angeordnet sein können.

Außerdem ist klar, daß in dem Grundkörper auch mehrere Lichtausgänge und damit mehr als zwei Lichtwege vorgesehen sein können, die von geeigneten Kanalsystemen mit Flüssigkeiten unterbrochen sind, so daß zwischen den Lichtwegen geschaltet werden kann.

Fünfte Ausführung:

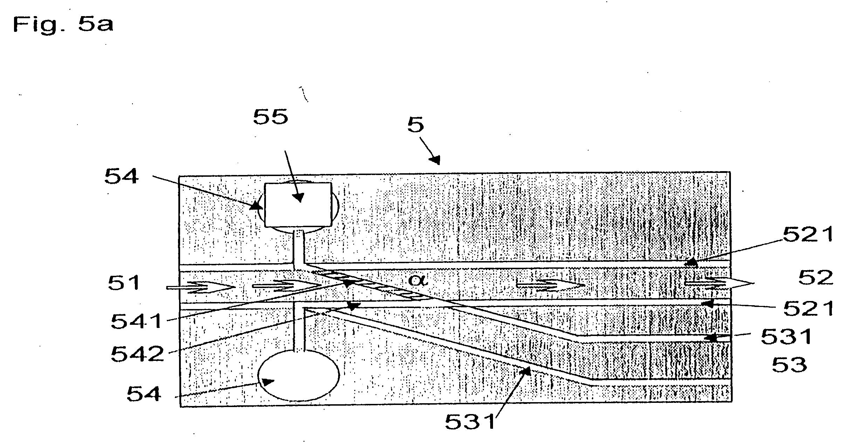

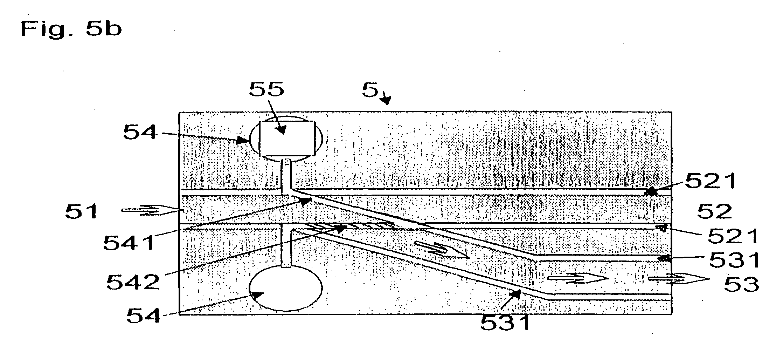

Figur 5a) und b) zeigen einen Längsschnitt durch ein fünftes vorteilhaftes Ausführungsbeispiel der vorliegenden Erfindung. In einem Grundkörper 5 aus lichtleitendem Material (beispielsweise ausgewählt aus PE, PP, PS, PC und PMMA) sind ein erster und zweiter paralleler Graben 521 in vorbestimmtem Abstand und mit vorbestimmter Breite derart ausgebildet, daß sie sich im wesentlichen durch den gesamten Grundkörper 5 erstrecken. In Fig. 5 sind die beiden Gräben 521 beispielhaft als parallele Geraden ausgebildet. Wird nun auf der einen Seite des Grundkörpers 5 Licht in den Bereich zwischen den beiden Gräben 521 eingeführt, breitet sich das Licht in dem Grundkörper 51 derart aus, daß es an den Gräben 521 reflektiert wird, und daher in dem Zwischenraum zwischen den beiden Gräben 521 verbleibt. Das Licht durchtritt daher den Grundkörper wie in Fig. 5a dargestellt ist in Pfeilrichtung und tritt zwischen den beiden Gräben 521 an der Stelle 52 aus dem Grundkörper 5, die dem Lichteintritt 51 gegenüberliegt. Der Zwischenraum zwischen den beiden Gräben 521 hat daher die Funktion eines Lichtleiters 51-52.

Erfindungsgemäß ist in dem Grundkörper 5 außerhalb des Lichtleiters 51-52 auf der einen Seite des Lichtleiters 51-52 gegenüber dem ersten Graben 521 ein erster Hohlraum 54 ausgebildet, und auf der anderen Seite des Lichtleiters 51-52 gegenüber dem zweiten Graben 521 ein zweiter Hohlraum 54 ausgebildet. In Fig. 5 sind die beiden Hohlräume 54 beispielhaft zylindrisch ausgebildet. Erfindungsgemäß weisen der erste und zweite Graben 521 jeweils an vorbestimmter Stelle eine Unterbrechung auf, die einander gegenüberliegen. Außerdem sind erfindungsgemäß der erste und zweite Hohlraum 54 mittels einem Kanal 541-542 mit vorbestimmter Breite miteinander verbunden. Die Unterbrechung des ersten Grabens 521 ist vorteilhaft etwas größer als die Breite des Kanals 541-542 ausgebildet, und die Unterbrechung des zweiten Grabens 521 ist vorteilhaft größer als der Abstand der beiden Gräben 521 ausgebildet und mit ihrem einen Ende gegenüber der Unterbrechung des ersten Grabens 521 angeordnet. Der Kanal 541-542 führt erfindungsgemäß in einem ersten Abschnitt von dem ersten Hohlraum 54 zu der Unterbrechung des ersten Grabens 521 und in einem zweiten Abschnitt 541 geradlinig durch den Lichtleiter 51-52 zu dem anderen Ende der Unterbrechung des zweiten Grabens 521, und in einem dritten Abschnitt 542 entlang der Unterbrechung des zweiten Grabens 521 in einer Linie mit dem zweiten Graben 521 zu dem Ende der Unterbrechung des zweiten Grabens 521, das gegenüber der Unterbrechung des ersten Grabens 521 angeordnet ist, und in einem vierten Abschnitt zu dem zweiten Hohlraum 54. Der erste, zweite, dritte und vierte Abschnitt des Kanals 541-542 bilden in dieser Reihenfolge eine Verbindung der beiden Hohlräume 54. Der zweite Abschnitt 541 des Kanals 541-542 ist dabei erfindungsgemäß in einem vorbestimmten Winkel $\alpha$ im Bereich von 10°-80°, vorteilhaft 30°-60° zu den parallelen Gräben 521 angeordnet. Die Größe der Unterbrechung des zweiten Grabens 521 ist dabei entsprechend dem Winkel $\alpha$ ausgewählt.

Erfindungsgemäß sind in dem Grundkörper 5 ein dritter und vierter Graben 531 mit vorbestimmter Breite und in vorbestimmtem Abstand parallel zueinander ausgebildet. Die Breite und der Abstand des dritten und vierten Grabens 531 entspricht vorteilhaft der Breite und dem Abstand des ersten und zweiten Grabens 521. Die beiden Gräben 531 sind beispielhaft als parallele Geraden ausgebildet. so daß ihr Zwischenraum wie der Zwischenraum zwischen dem ersten und zweiten Graben 521 als Lichtleiter fungiert. Erfindungsgemäß beginnt der dritte Graben 531 an dem Ende der Unterbrechung des zweiten Grabens 521 an dem der Abschnitt 541 des Kanals 541-542 angeordnet ist und der vierte Graben 531 an dem anderen Ende der Unterbrechung des zweiten Grabens 521. Erfindungsgemäß ist der dritte Graben 531 in einer Linie mit dem zweiten Abschnitt 541 des Kanals 541-542 angeordnet. Wie in Fig. 5 dargestellt ist, können der dritte und vierte Graben in ihrem weiteren Verlauf abgewinkelt sein, so daß sie beispielsweise parallel zu dem ersten und zweiten Graben 521 aus dem Grundkörper 5 herausführen.

Die vorstehende Struktur des Grundkörpers 5 ist außerdem mit einer dünnen Kunststoffolie bedeckt, so daß die Hohlräume 54 und der Kanal 542-541 gas- und flüssigkeitsdicht abgeschlossen sind. Erfindungsgemäß sind die beiden Hohlräume 54 mit Luft gefüllt, während in dem zweiten Abschnitt 541 des Kanals 541-542 eine Flüssigkeit mit im wesentlichen gleichem Brechungsindex wie der lichtleitende Grundkörper 5 angeordnet ist. Die vorstehenden Gräben 521 und 531 können durch den Grundkörper 5 durchgehend ausgebildet sein, wobei der Grundkörper 5 mit einer Bodenplatte versehen wird, die die Hohlräume 54 und den Kanal 541-542. luftdicht abschließt.

Erfindungsgemäß ist bei der fünften Ausführung der vorliegenden Erfindung außerdem über einem der beiden Hohlräume 54 ein Mittel 55 zur Verlagerung der Flüssigkeit in dem Kanal 541-542 angeordnet, das geeigneterweise ein piezoelektrischer Aktor 55 ist. Der Betriebszustand, bei dem an dem Piezoaktor 55 keine Spannung anliegt, ist in Fig. 5a dargestellt. Wird in diesem Betriebszustand in den Zwischenraum 51 zwischen den beiden Gräben 521 Licht in den Grundkörper 5 eingeführt, durchtritt das Licht den Grundkörper durch den Lichtwellenleiter 51-52, der begrenzt ist von den beiden Gräben 521 und dem dritten Abschnitt 542 des Kanals 541-542, in dem in diesem Zustand Luft ist. Wird nun an den Piezoaktor 55 eine Spannung angelegt, dann übt der Piezoaktor 55 auf das in dem Hohlraum 54 eingeschlossene Gasvolumen (hier Luft) einen Druck aus, der sich in dem Kanal 541-542 ausbreitet und die Flüssigkeit von dem zweiten Abschnitt 541 in den dritten Abschnitt 542 des Kanals verlagert. In diesem Betriebszustand ist daher der zweite Abschnitt 541 des Kanals 541-542 mit einem Gas gefüllt, das einen wesentlich anderen Brechungsindex als der lichtleitende Grundkörper 5 aufweist, und in dem dritten Abschnitt 542 des Kanals 541-542 ist die Flüssigkeit mit im wesentlichem mit dem des Grundkörpers identischem Brechungsindex angeordnet. Daher wird in diesem Betriebszustand, der in Fig. 5b dargestellt ist, Licht, das in den Lichteintritt 51 zwischen den beiden Gräben 521 in den Grundkörper 5 eingeführt wird, an dem zweiten Abschnitt 541 des Kanals 541-542 reflektiert, durchdringt den dritten Abschnitt 542 des Kanals, und das Licht breitet sich in seinem weiteren Verlauf zwischen den beiden Gräben 531 aus und tritt an dem Ausgang 53 aus dem Grundkörper 5 aus.

In einer Modifikation der fünften Ausführung der vorliegenden Erfindung sind der erste und zweite Hohlraum 54 von einem ersten und zweiten Piezoaktor 55 bedeckt und die beiden Hohlräume 54 mit einer Flüssigkeit mit geeignetem Brechungsindex gefüllt. Bei dieser Modifikation wird an die beiden Aktoren 55 wechselseitig Spannung angelegt, so daß abwechselnd einerseits mittels dem ersten Piezoaktor 55 von dem ersten Hohlraum 54 die Flüssigkeit in den ersten und zweiten Abschnitt 541 des Kanals 541-542 gedrückt wird, während der dritte Abschnitt 542 des Kanals 541-542 mit Gas gefüllt ist, da der zweite Aktor 55 im Ruhezustand ist, und andererseits wird mittels dem zweiten Piezoaktor 55 von dem zweiten Hohlraum 54 die Flüssigkeit in den vierten und dritten 542 Abschnitt des Kanals gedrückt, während der erste Aktor 55 im Ruhezustand ist und der zweite Abschnitt 541 des Kanals 541-542 mit Gas gefüllt ist.

Mittels der vorstehenden fünften Ausführung der vorliegenden Erfindung wird ein erfindungsgemäßer optischer Schalter bereitgestellt.

Sechste Ausführung:

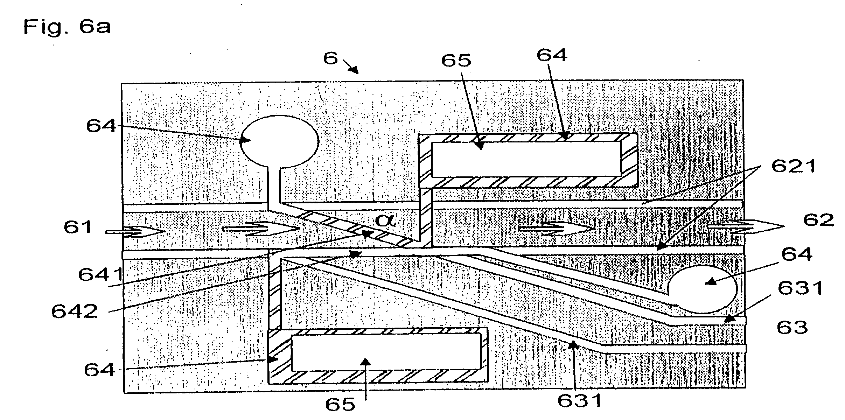

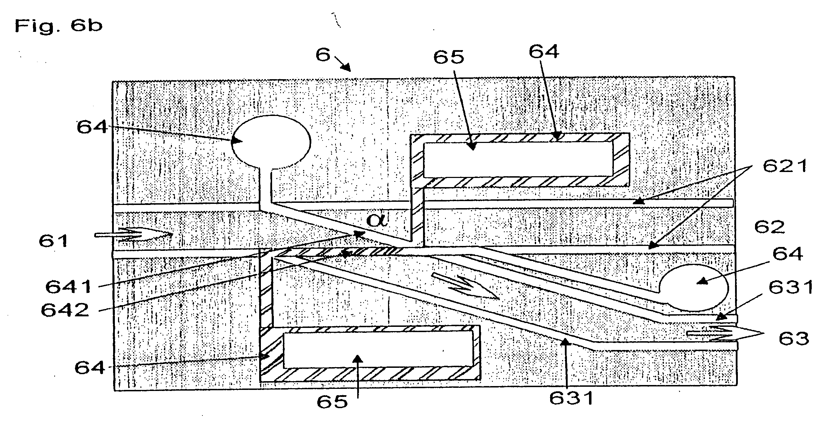

Fig. 6a und b zeigen eine sechste Ausführung der vorliegenden Erfindung, die eine weitere Modifikation der vorstehenden funften Ausführung ist. In dem lichtleitenden Grundkörper 6 sind ein erster und zweiter Graben 621 und ein dritter und vierter Graben 631 entsprechend jeweils dem ersten und zweiten Graben 521 und dem dritten und vierten Graben 531 der fünften Ausführung ausgebildet. Im Unterschied zur fünften Ausführung weist der erste Graben 621 jedoch eine erste und zweite Unterbrechung auf, die jeweils den beiden Enden einer Unterbrechung des zweiten Grabens 621 gegenüberliegen, die der Unterbrechung des zweiten Grabens 521 der fünften Ausführung entspricht. Der Zwischenraum zwischen dem ersten und zweiten Graben 621 bildet einen Lichtweilenleiter 61-62, und der Zwischenraum zwischen dem dritten und vierten Graben 631 bildet einen Lichtwellenleiter 61-63 Außerdem sind in dem Grundkörper 6 auf der einen Seite des Lichtwellenleiters 61-62 ein erster und zweiter Hohlraum 64 ausgebildet und auf der anderen Seite des Lichtwellenleiters 61-62 sind ein dritter und vierter Hohlraum 64' ausgebildet, von denen einer zwischen dem ersten 61-62 und zweiten 61-63 Lichtwellenleiter angeordnet ist.

Erfindungsgemäß sind der erste und zweite Hohlraum 64 mit einem ersten Kanal verbunden, der drei Abschnitte aufweist. Der erste Abschnitt des ersten Kanals erstreckt sich von dem ersten Hohlraum 64 zu der ersten Unterbrechung des ersten Grabens 621. Der zweite Abschnitt 641 des ersten Kanals erstreckt sich im Anschluß an den ersten Abschnitt in einem Winkel α zu den Gräben 621 durch den Lichtwellenleiter 61-62. Der Winkel α entspricht dem Winkel α der fünften Ausführung der vorliegenden Erfindung, und der zweite Abschnitt 641 des ersten Kanals entspricht in seiner Lage und Ausbildung dem zweiten Abschnitt 541 der fünften Ausführung. Der dritte Abschnitt des ersten Kanals erstreckt sich im Anschluß an den zweiten Abschnitt 641 senkrecht durch den Lichtwellenleiter 61-62 durch die zweite Unterbrechung des ersten Grabens 621 bis zu dem zweiten Hohlraum 64, so daß die beiden Hohlräume 64 mittels dem ersten Kanal miteinander verbunden sind. Dabei ist die erste und zweite Unterbrechung des ersten Grabens 621 geringfügig größer ausgebildet als die Breite des ersten Kanals. Der dritte und vierte Hohlraum 64' sind erfindungsgemäß über einen zweiten Kanal miteinander verbunden, der ebenfalls wie der erste Kanal im wesentlichen drei Abschnitte aufweist. Der erste Abschnitt des zweiten Kanals erstreckt sich von dem dritten Hohlraum 64' zu dem Ende der Unterbrechung des zweiten Grabens 621 das der ersten Unterbrechung des ersten Grabens 621 gegenüberliegt. Der zweite Abschnitt 642 des zweiten Kanals erstreckt sich im Anschluß an den ersten Abschnitt entlang der Unterbrechung des zweiten Grabens 621, und entspricht in seiner Lage und Ausbildung dem dritten Abschnitt 542 der fünften Ausführung. Der dritte Abschnitt des zweiten Kanals schließt an den zweiten Abschnitt 642 an und erstreckt sich bis zu dem vierten Hohlraum 64'. Auf diese Art und Weise sind mittels dem zweiten Kanal der dritte und vierte Hohlraum 64' miteinander verbunden.

Der wie vorstehend beschriebene strukturierte Grundkörper 6 ist ebenso wie der Grundkörper 5 nach unten abgeschlossen, indem die Hohlräume, Gräben und Kanäle nicht durchgehend ausgebildet sind, oder indem der Grundkörper 6 mit einer Bodenplatte versehen ist. Außerdem ist der Grundkörper 6 mit einer dünnen Kunststoffdeckfolie gas- und flüssigkeitsdicht verschlossen, und in einem Hohlraum des ersten und zweiten Hohlraums 64 ist eine Flüssigkeit mit im wesentlichen gleichem Brechungsindex wie der Grundkörper 6 eingebracht, wobei die Flüssigkeit den Hohlraum 64 geeigneterweise vollständig ausfüllt, während in dem anderen Hohlraum 64 ein Gas wie z.B: Luft enthalten ist.

Außerdem ist in einem Hohlraum des dritten und vierten Hohlraums 64' ebenfalls eine Flüssigkeit mit im wesentlichen gleichem Brechungsindex wie der Grundkörper 6 eingebracht, so daß die Flüssigkeit den Hohlraum 64' geeigneterweise vollständig ausfüllt, während in dem anderen Hohlraum 64' ebenfalls ein Gas wie z.B: Luft enthalten ist.

An den mit der Flüssigkeit gefüllten Hohlräumen 64 und 64' ist jeweils ein Mittel 65 zur Verschiebung der Flüssigkeit von dem Hohlraum 64 und 64' in die jeweiligen Kanalabschnitte 641 bzw. 642 angeordnet. Die Mittel zur Verschiebung der Flüssigkeit sind vorzugsweise piezoelektrische Aktoren 65, die vorteilhaft oberhalb der Hohlräume 64 und 64' angeordnet sind.

Die Hohlräume 64 und 64' können beispielsweise zylindrisch, kubisch, quaderförmig oder ellyptisch sein, wobei sich ihre Abmessungen aus den Abmessungen (Breite Höhe und Länge) der jeweiligen Kanäle, dem daraus resultierendem zu transportierenden Flüssigkeitsvolumen und den verwendeten Aktoren 65 ergeben: Erfindungsgemäß ist der Querschnitt und das Volumen der Hohlräume groß gegenüber dem Querschnitt und dem Volumen der Kanäle. Dies gilt auch für die anderen Ausführungen der vorliegenden Erfindung.

Fig. 6a und 6b zeigen die beiden Betriebszustände der als optischer Schalter fungierenden sechsten Ausführung der vorliegenden Erfindung.

In dem ersten Betriebszustand von Fig. 6a liegt an dem Aktor 65 eine Spannung an, so daß die hier in dem zweiten Hohlraum 64 enthaltene Flüssigkeit auch den zweiten 641 und dritten Abschnitt des ersten Kanals ausfüllt. Der erste mit Luft gefüllte Hohlraum 64 wirkt dabei als Puffer. Außerdem ist der Aktor 65' in Ruhestellung, so daß der zweite Abschnitt 642 des zweiten Kanals frei von Flüssigkeit ist. Fällt in diesem Betriebszustand Licht durch den Eingang 61 in den Grundkörper 6 ein so tritt es an dem Ausgang 62 wieder aus dem Grundkörper 6 aus.

In dem zweiten Betriebszustand von Fig. 6b liegt an dem Aktor 65' eine Spannung an, so daß die hier in dem dritten Hohlraum 64' enthaltene Flüssigkeit auch den zweiten 642 Abschnitt des zweiten Kanals ausfüllt. Der vierte mit Luft gefüllte Hohlraum 64 wirkt dabei als Puffer. Außerdem ist der Aktor 65 in Ruhestellung, so daß der zweite Abschnitt 641 und der dritte Abschnitt des ersten Kanals frei von Flüssigkeit ist. Fällt in diesem Betriebszustand Licht durch den Eingang 61 in den Grundkörper 6 ein so tritt es an dem Ausgang 63 wieder aus dem Grundkörper 6 aus.

Siebte Ausführung:

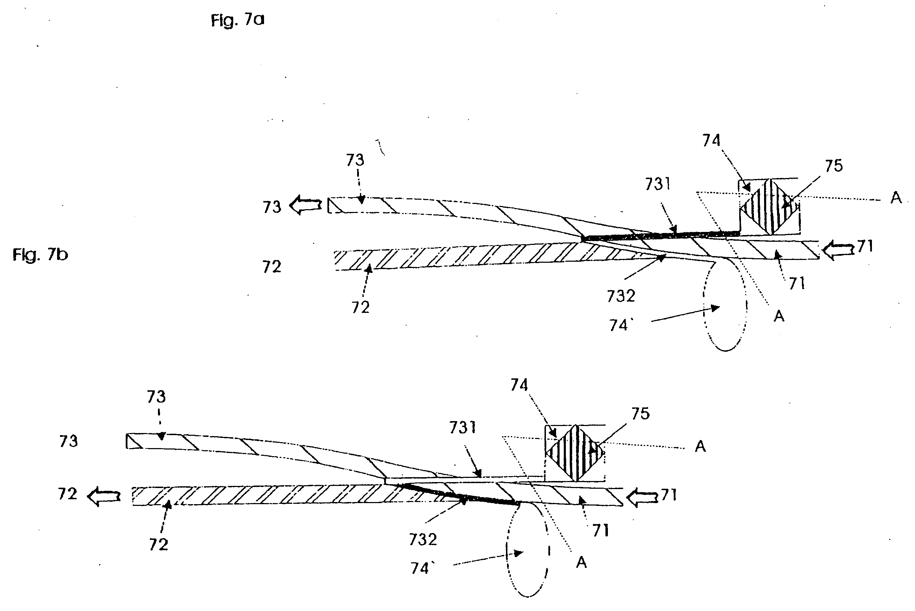

Fig. 7a bis e zeigen eine siebte vorteilhafte Ausführung der vorliegenden Erfindung. In einem Grundkörper 70 sind ein Eingangs-Lichtwellenleiter 71, vorzugsweise ein Polymerlichtwellenleiter, und ein erster 74 und zweiter 74' Hohlraum auf gegenüberliegenden Seiten des Eingangs-Lichtwellenleiters 71 angeordnet. Außerdem ist in dem Grundkörper 70 ein Kanal 731-732 ausgebildet, der die beiden Hohlräume 74 und 74' miteinander verbindet. Der Eingangs-Lichtwellenleiter 71 gabelt sich in zwei Äste, nämlich einen ersten 72 und zweiten 73 Lichtwellenleiter. Dabei kann der erste Lichtwellenleiter 72 als eine im wesentlichen geradlinige Fortsetzung des Eingangs-Lichtwellenleiters 71 ausgebildet sein, und der zweite Lichtwellenleiter 73 gegenüber dem Lichtwellenleiter 71 einen bogenförmig gekrümmten Verlauf nehmen. Es können jedoch auch beide Lichtwellenleiter 72 und 73 an der Abzweigung jeweils in entgegengesetzter Richtung von der Richtung des Lichtwellenleiters 71 abweichen. Wesentlich für die vorliegende Erfindung ist, daß die beiden Lichtwellenleiter 72 und 73 in ihrem weiteren Verlauf zu verschiedenen Positionen führen. Der Krümmungsradius R eines bogenförmig geführten Lichtwellenleiters ist dabei abhängig von dem Brechungsindex des Lichtwellenleiters und dem Brechungsindex des den Lichtwellenleiter umgebenden Mediums. Erfindungsgemäß führt der erste Abschnitt 731 des Kanals 731-732 von dem ersten Hohlraum 74 entlang dem Lichtwellenleiter 71 und entlang dem Lichtwellenleiter 72 an deren einer Seite durch den Lichtwellenleiter 73 bis in den Bereich des Grundkörpers 70 zwischen den beiden Lichtwellenleitem 72 und 73. Dabei stellt der Kanal in seinem Abschnitt 731 eine Lücke zwischen dem Lichtwellenleiter 73 und dem Lichtwellenleiter 71 bereit. Der zweite Abschnitt 732 schließt an den ersten Abschnitt 731 des Kanals 731-732 an und führt erfindungsgemäß entlang dem Lichtwellenleiter 73 und entlang dem Lichtwellenleiter 71 an deren einer Seite (die andere Seite des Lichtwellenleiters 71) zu dem zweiten Hohlraum 74'. Dabei stellt der Kanal in seinem Abschnitt 731 erfindungsgemäß eine Lücke zwischen dem Lichtwellenleiter 72 und dem Lichtwellenleiter 71 bereit. Da die Abschnitte 731 und 732 direkt an der einen Seite des Lichtwellenleiters 71 und 72 bzw, an der anderen Seite des Lichtwellenleiters 71 und 73 geführt sind, sind sie im Falle von bogenförmigen Abzweigungen der Lichtwellenleiter 72 und 73 ebenfalls bogenförmig mit im Punkt der Abzweigung einem im wesentlichem identischen Krümmungsradius R wie die Lichtwellenleiter 72 und 73 ausgebildet.

Die Hohlräume 74 und 74' und der Kanal 731-732 durchdringen den Grundkörper 70 nicht vollständig, so daß sie nach unten abgeschlossen sind. Der Grundkörper 70 ist mit einer Kunststoffolie 701 abgedeckt, die geeigneterweise auch die Lichtwellenleiter 71, 72 und 73 bedeckt, und die Hohlräume 74 und 74' gas- und flüssigkeitsdicht abschließt. In den beiden Hohlräumen 74 und 74' ist ein Gas, beispielsweise Luft enthalten, und in dem ersten Abschnitt 731 ist eine Flüssigkeit mit im wesentlichen gleichem Brechungsindex wie der Brechungsindex der Lichtwellenleiter 71,72 und 73 eingebracht. An dem einen der beiden Hohlräume 74 und 74' ist ein Mittel 75 zur Verkleinerung des Volumens des Hohlraums 74 und damit zur Ausübung eines Drucks auf das in dem Hohlraum 74 befindliche Gas angeordnet. Das Mittel 75 ist vorteilhaft ein piezoelektrischer Aktor 75.

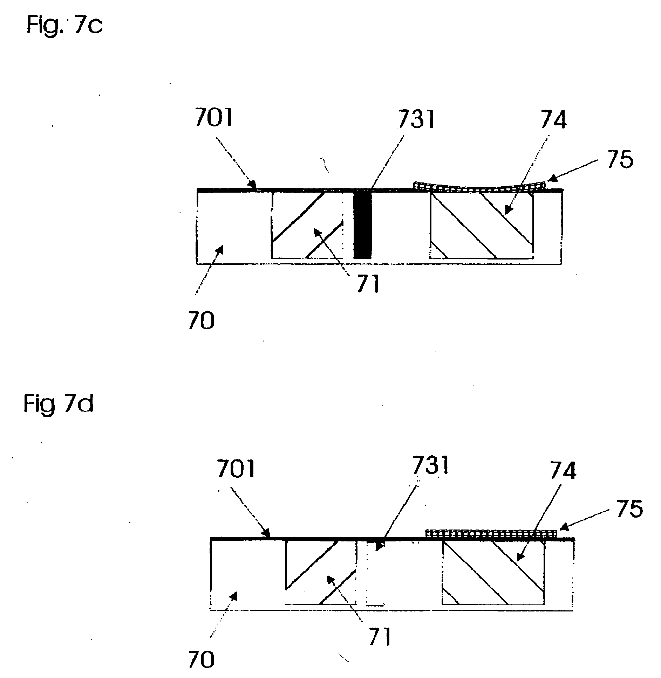

Fig. 7a zeigt den ersten Betriebszustand der vorstehend beschriebenen erfindungsgemäßen Anordnung, die einen optischen Schalter bereitstellt, wobei an dem piezoelektrischen Aktor 75 keine Spannung anliegt, und daher kein Druck auf das Gas in dem Hohlraum 74 ausgeübt wird, und die Flüssigkeit in dem Abschnitt 731 des Kanals angeordnet ist. In diesem Betriebszustand wird Licht aus dem Wellenleiter 71 in den Wellenleiter 73 gelenkt. Der erste Betriebszustand ist ebenfalls in Fig. 7c, einem Schnitt entlang der Linie A-A in Fig. 7a dargestellt.

Fig. 7b zeigt den zweiten Betriebszustand der vorstehend beschriebenen erfindungsgemäßen Anordnung, die einen optischen Schalter bereitstellt, wobei an dem piezoelektrischen Aktor 75 eine Spannung anliegt, und daher ein Druck auf das Gas in dem Hohlraum 74 ausgeübt wird, und dadurch die Flüssigkeit nun in dem Abschnitt 732 des Kanals angeordnet ist. In diesem Betriebszustand wird Licht aus dem Wellenleiter 71 in den Wellenleiter 72 gelenkt. Wird die an dem Aktor 75 anliegende Spannung abgeschaltet, wird die Vorrichtung wieder in ihren ersten Betriebszustand überführt. Bei der Verlagerung der Flüssigkeit innerhalb des Kanals 731-732 fungiert der zweite ebenfalls mit Gas gefüllte Hohlraum erfindungsgemäß als Puffer. Der zweite Betriebszustand ist ebenfalls in Fig. 7d, einem Schnitt entlang der Linie A-A in Fig. 7b dargestellt.

Fig. 7e zeigt eine Modifikation der siebten Ausführung der vorliegenden Erfindung, bei der in dem Bereich zwischen den beiden Lichtwellenleitem 72 und 73 ein dritter Hohlraum 76 ausgebildet ist, und der erste und zweite Abschnitt 731 und 732 über den Hohlraum 76 miteinander verbunden sind. Außerdem sind bei der Modifikation von Fig. 7e der erste und zweite Hohlraum 74 und 74' beide vollständig mit der Flüssigkeit mit geeignetem Brechungsindex gefüllt, und an beiden Hohlräumen 74 und 74' ist ein Mittel 75 bzw. 75' zur Verlagerung der Flüssigkeit in die Kanal-Abschnitte 731 bzw. 732 vorgesehen, das geeigneterweise ein piezoelektrischer Aktor ist. Mittels wechselseitiger Schaltung der Piezoaktoren 75 und 75' wird erfindungsgemäß jeweils Flüssigkeit aus dem einen der Hohlräume 74 und 74' in einen der Kanal-Abschnitte 731 und 732 verlagert, während gleichzeitig Flüssigkeit aus dem anderen der beiden Kanal-Abschnitte 731 und 732 in den anderen der beiden Hohlräume 74 und 74' zurückgeführt wird.

Hierdurch werden die beiden vorstehend beschriebenen Betriebszustände der siebten Ausführung der vorliegenden Erfindung bereitgestellt. Der dritte Hohlraum 76 dient hier bei der Verlagerung der Flüssigkeiten als Puffer und vereinfacht die Abstimmung von Flüssigkeitsvolumen, Volumen der Hohlräume 74 und 74' und Volumen der Kanal-Abschnitte 732 und 731.

Besondere Vorteile der vorliegenden Erfindung werden wie schon vorstehend zu den Ausführungen 1 bis 4 erwähnt, dadurch erreicht, daß es ermöglicht wird auf einfache Weise Licht auch hochfrequent zwischen verschiedenen Lichtwegen zu schalten. Die in der Mikrofluidik verfügbaren Aktoren lassen hohe Schaltfrequenzen zu, und die fluidischen Kanäle/Hohlräume sind mit mikrotechnischen Verfahren sehr kostengünstig herzustellen und in großen Stückzahlen zu fertigen. Außerdem ist für die Materialauswahl einer geeigneten Flüssigkeit allein deren Brechungsindex im Verhältnis zu dem Brechungsindex der Lichtwege und deren Oberflächenspannung maßgebend.

<u>Achte Ausführung:</u>

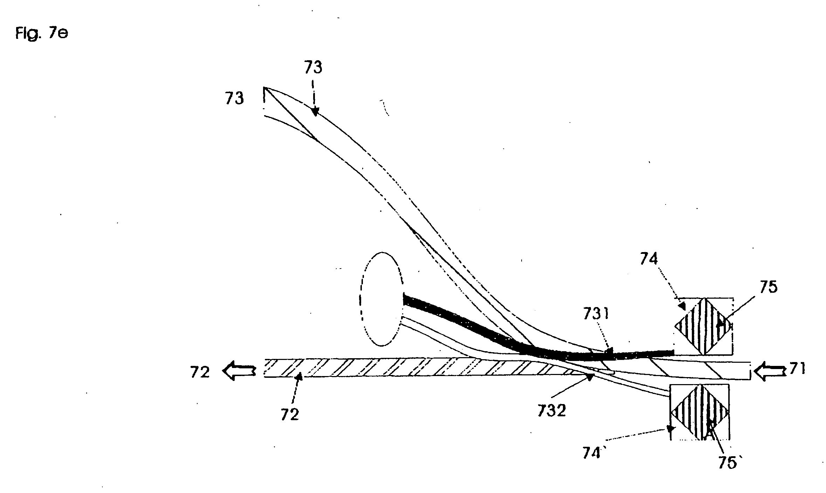

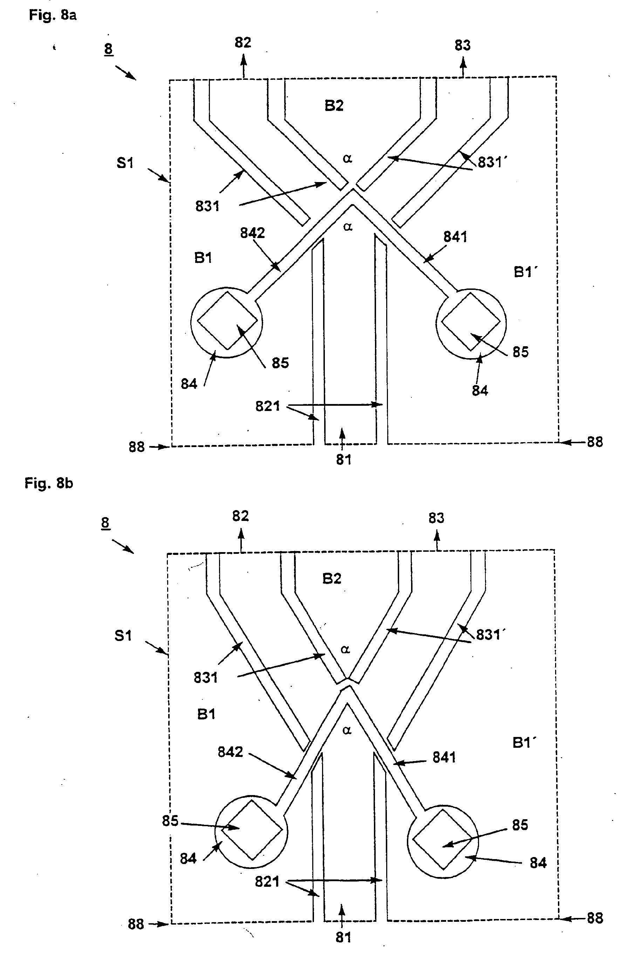

Fig. 8a und b zeigt eine achte Ausführung der vorliegenden Erfindung, eine vorteilhafte Modifikation der fünften und siebten Ausführung. In ein planares lichtleitendes Substrat S1 sind wie bei der fünften Ausführung im wesentlichen parallele Gräben 821, 831 und 831' mit im wesentlichem gleichen Abstand ausgebildet, und schließen einen Bereich ein, der als sich verzweigender Wellenleiter fungiert und Y-förmig ausgebildet ist. Geeigneterweise beginnen die Gräben 821 an einer äußeren Kante des in der Zeichnung beispielhaft rechteckig ausgebildeten Substrats S1, und stellen dort einen Lichteingang 81 bereit. Die dem Lichteingang 81 gegenüberliegenden Enden der beiden Gräben 821 sind geeigneterweise im zentralen Bereich des Substrats S1 angeordnet. An der dem Lichteingang 81 gegenüberliegenden Kante des Substrats beginnen die parallelen Gräben 831 und 831' und stellen dort zwei separate Lichtausgänge 82 und 83 bereit. Dabei sind die parallelen Gräben 831 und 831' vorteilhaft derart an den Lichtausgängen 81 und 82 angeordnet, daß das Licht das Substrat S1 im wesentlichen parallel zum Lichteintritt 81 verläßt. In ihrem anschließenden weiteren Verlauf sind die beiden äußeren Gräben 831 und 831' auf die Enden jeweils eines der beiden Gräben 821 gerichtet und die Enden der beiden Gräben 831 und 831' sind vorteilhaft in der Nähe des korrespondierenden Grabens 821 angeordnet, so daß eine Lücke zwischen den Gräben 831, 831' und 821, 821 gebildet ist, die etwas größer als die Breite eines Kanals 841, 842 ist, der nachfolgend beschrieben wird. Die beiden inneren Gräben 831 und 831' sind in ihrem weiteren Verlauf aufeinander zu gerichtet, und ihre beiden Enden sind benachbart angeordnet, so daß eine Lücke zwischen den beiden Enden der inneren Gräben 831 und 831' gebildet ist, die etwas größer als die Breite des Kanals 841, 842 ist.

Wie vorstehend beschrieben ist mittels der parallelen Gräben 821 und 831, 831' in dem Substrat ein Wellenleiter mit einem Lichteingang 81, einer Y-förmigen Gabelung und zwei Lichtausgängen 82 und 83 bereitgestellt, der das Substrat in die Bereiche B1 und B1' und B2 teilt. Die Bereiche B1 und B1' liegen außerhalb der Gabelung, und der Bereich B2 liegt innerhalb der Gabelung. Dabei haben die parallelen Gräben 821 und 831 und 831' vorteilhaft im wesentlichen gleiche Abstände, sind im wesentlichen gleich breit und sind durchgehend durch das Substrat S1 ausgebildet. In Fig. 8a und Fig. 8b gabelt sich der Lichtweg beispielhaft geradlinig in den Winkeln $\alpha = 90°$ und $\alpha = 60°$, bevor die beiden Lichtwege erneut entsprechend abgewinkelt auf die beiden Lichtausgänge 82, 83 gerichtet sind, so daß das Licht das Substrat S1 im wesentlichen gleichgerichtet zu seinem Lichteintritt 81 wieder verläßt. Die beiden Gabeläste können jedoch auch vorteilhaft durch entsprechend bogenförmig ausgebildete Gräben 831 und 831' von der Abzweigung am Ende der beiden Gräben 821 bogenförmig zu den beiden Lichtausgängen führen. Vorteilhaft ist eine Abzweigung, die einen Winkei $< 90°$, vorteilhafter $< 60°$, vorteilhafter $< 30°$ einschließt.

In dem Substrat S1 sind außerdem die beiden Hohlräume 84 einander gegenüberliegend in den Bereichen B1 und B1' ausgebildet. Die beiden Hohlräume sind erfindungsgemäß mit einem Kanal verbunden, der ausgehend von dem ersten Hohlraum 84 in einem ersten Abschnitt 841 durch die Lücke zwischen den äußeren Gräben 821 und 831' zu der Lücke zwischen den inneren Gräben 831 und 831' führt und von dort in einem zweiten Abschnitt 842 durch die Lücke zwischen den äußeren Gräben 831 und 821 zu dem zweiten Hohlraum 84 führt. Der erste Abschnitt 841 und der zweite Abschnitt 842 schließen damit in ihrem Berührungspunkt einen Winkel $\alpha$ ein, dessen Betrag erfindungsgemäß im wesentlichen dem Betrag des Winkels $\alpha$ entspricht, so daß der erste und zweite Abschnitt 841 und 842 jeweils stetige Fortsetzungen der korrespondierenden inneren Gräben 831 und 831' sind. Der erste und zweite Abschnitt 841 und 842 des Kanals können daher wie in Fig. 8a und Fig. 8b dargestellt linear zu den korrespondierenden Gräben 831 und 831' ausgebildet sein, oder auch bogenförmig (nicht dargestellt) ausgebildet sein.

Erfindungsgemäß sind daher in dem Substrat S1 ein erster und zweiter Lichtweg 81, 82 und 81, 83 mit gemeinsamem Eingang 81 und verschiedenen Ausgängen 82 und 83 bereitgestellt, wobei der Lichtaustritt aus dem Substrat aus beiden Ausgängen im wesentlichen gleichgerichtet zu seinem Eintritt ist. Erfindungsgemäß ist außerdem der erste Lichtweg 81, 82 im Gabelungsbereich begrenzt von dem ersten Abschnitt 841 des Kanals und der zweite Abschnitt 842 führt durch den Kernbereich des ersten Lichtwegs 81, 82; und der zweite Lichtweg 81, 83 ist im Gabelungsbereich begrenzt von dem zweiten Abschnitt 842 und der erste Abschnitt des Kanals 841 führt durch den Kembereich des zweiten Lichtwegs 81, 83.

Geeigneterweise sind die Kanäle durchgehend durch das Substrat S1 ausgebildet. Die Hohlräume 84, 84 können auch durchgehend durch das Substrat S1 ausgebildet sein, oder auch das Substrat nur teilweise durchdringen. Erfindungsgemäß haben die Hohlräume einen Querschnitt, der gegenüber dem Querschnitt des Kanals 841, 842 groß ist und schließen ein Volumen ein, das gegenüber dem Volumen des Kanals 841, 842 groß ist.

Erfindungsgemäß ist wie bei der fünften und siebten Ausführung in das miteinander verbundene System Hohlräume 84, 84 und Kanal 841, 842 eine erste Flüssigkeit eingebracht, deren Brechungsindex im wesentlichem dem Brechungsindex des Licht-Wellenleitenden Substrats S1 entspricht, und außerdem eine zweite Flüssigkeit und / oder ein Gas eingebracht, die mit der ersten Flüssigkeit nicht mischbar sind, und deren Brechungsindex von dem Brechungsindex des Licht-Wellenleitenden Materials deutlich verschieden ist. Der Boden des Substrat S1 ist mit einer nicht gezeigten Bodenplatte versehen, und das Substrat ist oben mit einer dünnen elastischen Folie bedeckt, die den Kanal und die Hohlräume 84, 84 Flüssigkeit - dicht und Gas - dicht abschließen. Erfindungsgemäß ist wahlweise oberhalb eines oder beider Hohlräume 84, 84 ein Mikro-Aktor 85 angeordnet, der durch Volumen- oder Druckveränderung eines Hohlraums 84, 84 oder wechselseitiger Volumen- oder Druckveränderung beider Hohlräume 84, 84 die erste Flüssigkeit wahlweise in den ersten 841 oder zweiten 842 Abschnitt des Kanals einführt.

Der Mikro-Aktor 85 kann thermisch die Flüssigkeit ganz oder teilweise zum Verdampfen bringen und/oder kann vorteilhaft ein mikromechanischer Aktor, ein piezoelektrischer Aktor, eine thermisch bewegte Membran oder ein Memory-Metall sein.

Durch die erfindungsgemäße Anordnung des mikromechanischen, vorteilhaft piezoelektrischen Antriebs 85 oberhalb der Hohlräume 84 und mit Kraftwirkung senkrecht zur Ebene der planaren Lichtausbreitung 81, 82 und 82, 83 und durch die vorstehend beschriebene Dimensionierung der Volumina der Hohlräume 84 werden die folgenden Vorteile erzielt:

Die besonders vorteilhafte Verwendung mikromechanischer, vorteilhaft piezoelektrischer Aktoren gestattet bei miniaturisierter Ausbildung der Lichtwege und des Kanals auch hochfrequente Schaltung, wobei die Flüssigkeit erfindungsgemäß als Wegverstärker des Antriebs fungiert. Das im wesentlichen einstückige Design und die Anordnung der Aktoren 85 oberhalb der Hohlräume gestattet eine kostengünstige besonders einfache Fertigung in im wesentlichen nur vier Arbeitsschritten, die unter Verwendung von Mikrostrukturverfahren auch im Batch-Betrieb durchführbar sind.

Schritt 1: Strukturierung der Gräben und Kanäle in dem Substrat S1.

Schritt 2: Versehen des Substrats mit einer Bodenplatte.

Schritt 3: Einbringen der Flüssigkeit F in wahlweise einen oder zwei Abschnitte des Systems Kanal 841, 842 und Hohlraum 84, 84.

Schritt 2a: Versiegeln des Substrats mit einer Folie.

Schritt 4 : Anordnung der Aktoren 85 auf der Folie.

Bei Batch-Betrieb: Trennen der einzelnen Schalter von dem Substrat.

Außerdem gestattet der erfindungsgemäße Antrieb mittels piezoelektrischer Aktoren vorteilhaft gegenüber beispielsweise thermischen Antrieben eine besonders breite Auswahl einer geeigneten Füssigkeit F, lediglich nach ihrem Brechungsindex und ihren Benetzungseigenschaften.

Durch das vorstehend beschriebene erfindungsgemäße im wesentlichen einstückige Design des Schalters 8 mit im wesentlichem parallelem Lichteingang 81 und Lichtausgängen 82 und 83 wird die Ankopplung des Schalters 8 an Lichtleiter auch in bestehende Systeme begünstigt da durch den Schaltbetrieb kein störender Richtungswechsel verursacht wird und lediglich ein Versatz in der Ebene des Lichteingangs erfolgt.

Besonders vorteilhaft ist hier wie auch bei der fünften und sechsten Ausführung die Strukturierung der Gräben 821, 831, 831' und Kanäle 841, 842 in einem Arbeitsschritt, wobei die Kanäle erfindungsgemäß als stetige Fortsetzung der Gräben 831 und 831' angeordnet sind und daher wie die Gräben 821, 831 und 831' als Grenzen der Lichtwege fungieren.

Der Schaltbetrieb der achten Ausführung der vorliegenden Erfindung ist im wesentlichen mit dem Schaltbetrieb der fünften, sechsten und siebten Ausführung identisch, weshalb hier auf die entsprechende vorstehende Beschreibung verwiesen wird.

Als logischer Schalter, hier abgekürzt mit TYP1 kann die achte Ausführung, wie die fünfte, sechste und siebte Ausführung beschrieben werden mit der Gleichung:

$$E1 \rightarrow A1 \text{ ODER } A2$$

Hierbei bedeutet abgekürzt:

E1: Eingang1, 81
A1: Ausgang1, 82
A2: Ausgang2, 83

Neunte Ausführung:

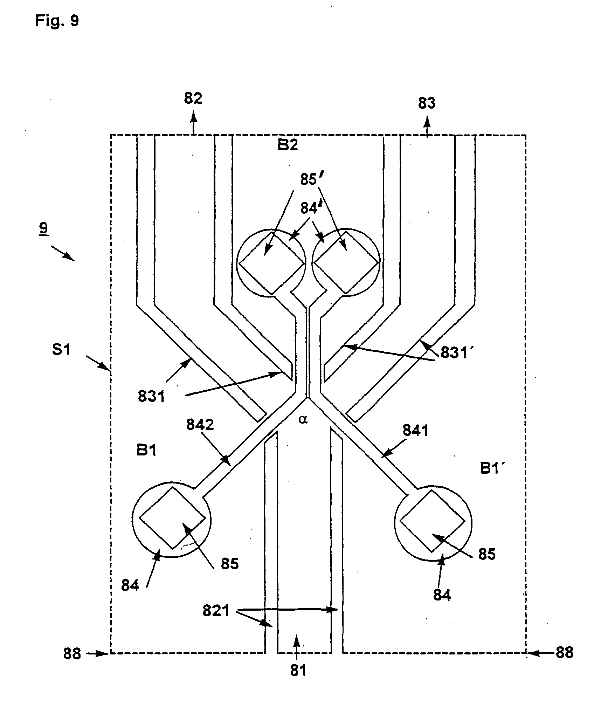

Fig. 9 zeigt eine neunte Ausführung der vorliegenden Erfindung, eine Kombination der achten Ausführung mit der sechsten Ausführung, wobei in der Zeichnung ähnliche Strukturelemente mit gleichen Referenzzeichen wie in Fig. 8 gekennzeichnet sind. Die Ausbildung und Anordnung der Gräben 821, 831 und 831' der neunten Ausführung entspricht im wesentlichen der achten Ausführung, mit dem Unterschied daß die Lücke zwischen den inneren Gräben 831, 831' etwas größer ist als die zweifache Breite eines Kanals 841, 842. Wie bei der achten Ausführung sind beidseitig der Gräben 821, 821 in den Bereichen B1 und B1' des Substrats S1 jeweils ein Hohlraum 84, 84 ausgebildet, und von den Hohlräumen 84, 84 führt jeweils ein Kanal 841, 842 durch die entsprechende Lücke zwischen den äußeren Gräben 821, 831 bzw. 821, 831' bis zu der Lücke zwischen den inneren Gräben 831, 831' , so daß die beiden Kanäle 841 und 842 benachbart angeordnet sind. Anders als bei der achten Ausführung sind die Kanäle 841, 842 jedoch nicht miteinander verbunden, sondern führen voneinander getrennt durch die Lücke zwischen den inneren Gräben 831, 831' hindurch in den Bereich B2 des Substrats S1 zu dort angeordneten Hohlräumen 84'und 84', die in ihrer Ausbildung den Hohlräumen 84 entsprechen. Auf diese Art und Weise sind erfindungsgemäß zwei voneinander unabhängige Systeme, Hohlraum 84' , Kanal 841, Hohlraum 84 und Hohlraum 84' , Kanal 842, Hohlraum 84 bereitgestellt, und oberhalb wahlweise eines oder beider Hohlräume 84, 84' ist jeweils ein Mikro-Aktor angeordnet.

Wie bei der sechsten und achten Ausführung sind in die Systeme Hohlraum, Kanal, Hohlraum eine erste geeignete Flüssigkeit und eine zweite geeignete Flüssigkeit und / oder ein geeignetes Gas eingebracht; und diesbezüglich und zu der Funktionsweise der neunten Ausführung wird auf die Beschreibung der sechsten und achten Ausführung verwiesen.

Als logischer Schalter, hier abgekürzt mit TYP1 kann die neunte Ausführung, wie die fünfte, sechste, siebte und achte Ausführung beschrieben werden mit der Gleichung:

$$E1 \rightarrow A1 \text{ ODER } A2$$

Hierbei bedeutet abgekürzt:

E1: Eingang1, 81
A1: Ausgang 1, 82
A2: Ausgang2, 83

Zehnte Ausführung:

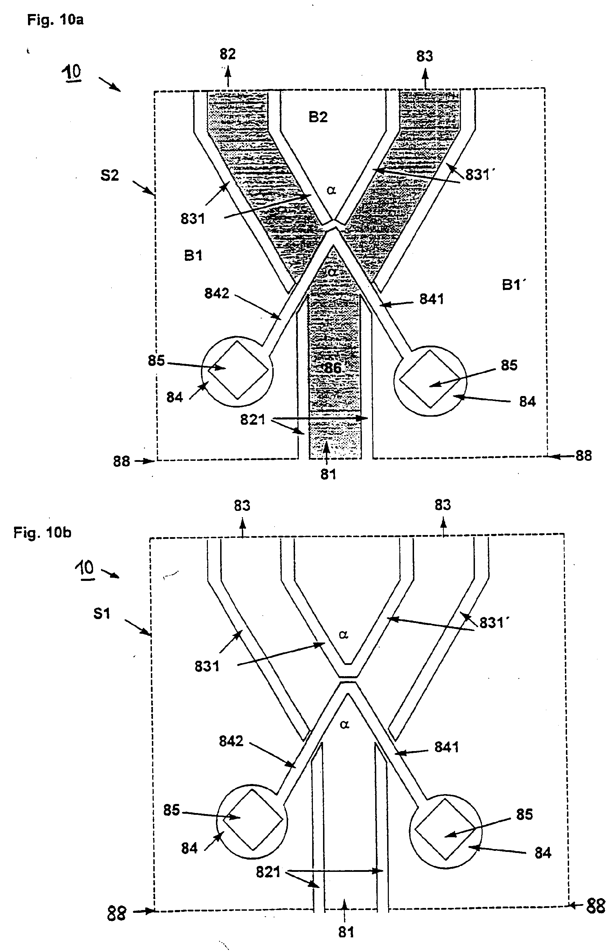

Fig. 10a zeigt eine zehnte Ausführung der vorliegenden Erfindung, eine Abwandlung der achten Ausführung von Fig. 8b. Wahlweise anstelle der Gräben 821, 831 und 831' oder als Lichtwellenleiter zwischen die Gräben 821, 831 und 831' sind hier die in ein geeignet vorstrukturiertes Substrat S2 wie bei der siebten Ausführung die Lichtwellenleiter 86 eingebracht. Das Substrat S2 der zehnten Ausführung der vorliegenden Erfindung ist daher vorteilhaft derart ausgewählt, daß dessen optische Eigenschaften deutlich von den optischen Eigenschaften der Lichtwellenleiter 86 verschieden sind.

Die übrige Anordnung der strukturellen Elemente der zehnten Ausführung entspricht den korrespondierenden Elementen der achten Ausführung. Die betreffenden Elemente sind mit entsprechenden Referenzzeichen in Fig. 10 gekennzeichnet, und es wird auf die korrespondierende Beschreibung der achten Ausführung verwiesen.

Der Vorteil der zehnten Ausführung gemäß Fig. 10a gegenüber der achten Ausführung besteht darin, daß die Materialwahl des Substrats S2 und der Lichtwellenleiter 86 flexibler vorgenommen werden kann, was Kostenvorteile ermöglicht und Feinabstimmungen des Designs auf vorbestimmte Applikationen mit speziellen funktionellen Anforderungen erleichtert.

Der Vorteil der achten Ausführung gegenüber der zehnten Ausführung gemäß Fig. 10a besteht in der vorstehend beschriebenen besonders einfachem und kostengünstigen Herstellung, auch als Serienfertigung im Batch-Betrieb.

Fig. 10b zeigt den erfindungsgemäßen optischen Schalter 10, eine weitere Abwandlung der achten Ausführung von Fig. 8b, die sich von der achten Ausführung darin unterscheidet, daß die inneren Gräben 831, 831' miteinander verbunden sind. Im übrigen wird auf die Beschreibung der achten Ausführung verwiesen.

Elfte Ausführung:

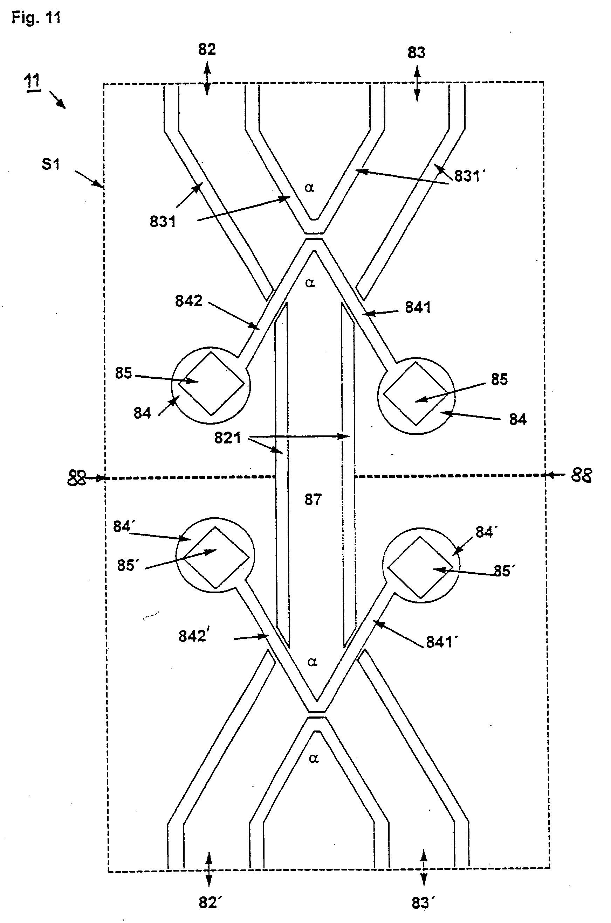

Fig. 11 zeigt eine elfte Ausführung 11 der vorliegenden Erfindung, eine Modifikation der zehnten Ausführung von Fig. 10b.

Die elfte Ausführung stellt ebenfalls einen optischen Schalter 11 bereit und besteht aus der Kombination zweier Schalter 10 gemäß Fig. 10b, die an der Kante 88 der Lichteingänge 81 zusammengesetzt sind, so daß die Gräben 821 und die Lichteingänge 81 einander gegenüberliegend angeordnet sind, und der zentrale Licht leitende Bereich 87 ausgebildet ist. Die elfte Ausführung stellt daher die Vereinigung zweier Ausführungen gemäß Fig. 10b dar, und es wird bezüglich der Funktionsweise auf die diesbezügliche Beschreibung der achten und zehnten Ausführung verwiesen, wobei gleiche Elemente in den Figuren 8, 10 und 11 gleiche Referenzzeichen haben. Es ist klar, daß der längliche zentrale Lichtwellen leitende Bereich 87 auch stark verkürzt ausgebildet sein kann, so daß die Wellenleiter hier X-förmig in dem Substrat S1 angeordnet sind und daß der optische Schalter 11 ebenfalls im wesentlichen einstückig ausgebildet ist.

Im Unterschied zu der achten Ausführung und zehnten Ausführung hat die elfte Ausführung der vorliegenden Erfindung zwei Lichteingänge 82 und 83, und zwei Lichtausgänge 82'und 83', wobei ebenfalls vorteilhaft ein- und austretendes Licht jeweils im wesentlichen parallel gerichtet ist, und diesbezüglich wie auch auf die übrigen Vorteile der achten und zehnten Ausführung verwiesen wird, die in vollem Umfang ebenfalls für die elfte Ausführung gelten.

Durch geeignete Schaltung der wahlweise zwei 85 und 85' oder vier 85, 85 und 85', 85' Aktoren, sind mit der elften Ausführung die nachstehenden Schaltungen möglich:

Erster Lichtweg: 82, 87, 82'
Zweiter Lichtweg: 82, 87, 83'
Dritter Lichtweg: 83, 87, 82'
Vierter Lichtweg: 83, 87, 83'

Als logischer Schalter hier abgekürzt mit TYP2 kann die elfte Ausführung beschrieben werden mit dem Gleichungssystem:

$$E1 \rightarrow (A1 \text{ ODER } A2) \text{ UND } E2 = AUS$$

$$E2 \rightarrow (A1 \text{ ODER } A2) \text{ UND } E1 = AUS$$

Hierbei bedeutet abgekürzt:

E1: Eingang1, 82
E1: Eingang1, 83
A1: Ausgang1, 82'
A2: Ausgang2, 83'

Zwölfte Ausführung:

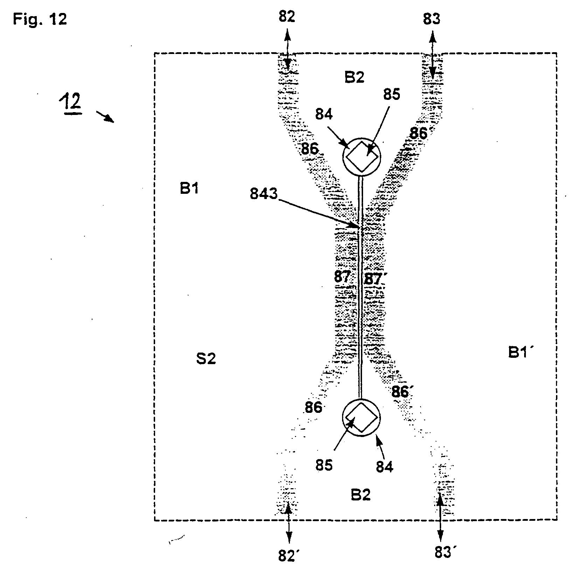

Fig. 12 zeigt eine zwölfte Ausführung der vorliegenden Erfindung, eine Modifikation der elften Ausführung.
Wahlweise anstelle der Gräben 821, 831 und 831' oder als Lichtwellenleiter zwischen die Gräben 821, 831 und 831 ' sind hier wie bei der neunten und siebten Ausführung in ein geeignet vorstrukturiertes Substrat S2 die Lichtwellenleiter 86, 87, 86 und 86', 87', 86' eingebracht. Bezüglich der Materialauswahl für das Substrat S2 und der Lichtwellenleiter hat die zwölfte Ausführung daher die gleichen Vorteile wie die zehnte Ausführung.
Die den korrespondierenden Elementen der elften Ausführung entsprechende Anordnung der strukturellen Elemente der zwölften Ausführung sind mit entsprechenden Referenzzeichen in Fig. 12 gekennzeichnet, und es wird auf die korrespondierende Beschreibung der achten und elften Ausführung verwiesen.
Der optische Schalter 12 unterscheidet sich von dem optischen Schalter 11 darin, daß der zentrale Licht leitende Bereich 87 parallel zur Ausbreitungsrichtung des Lichts mittels dem Kanal 843 in zwei parallele Lichtwellenleiter 87, 87'unterteilt ist, wobei der Kanal 843 zwei Hohlräume 84, 84' miteinander verbindet, und über wahlweise einem oder beiden Hohlräumen 84, 84' ein Mikro-Aktor 85, 85' angeordnet ist. Anders als bei dem optischen Schalter 11 sind hier die Hohlräume 84, 84' und die Aktoren 85, 85' in dem Bereich B2 des Substrats S2 zwischen den sich gabelnden Lichtwellenleitem 86 und 86' angeordnet. In das System Hohlraum 84, Kanal 843 und Hohlraum 84' ist ebenfalls eine Flüssigkeit F mit geeignetem Brechungsindex teilweise eingebracht, und die Flüssigkeit F kann durch geeignetes Schalten der Aktoren 85, 85' wahlweise in den Kanal 843 eingeführt bzw. aus dem Kanal 843 entfernt werden.
Der optische Schalter 11 stellt somit erfindungsgemäß zwei Lichtwege 82, 82' und 83,.83' bereit, die in einem zentralen Bereich des Substrats S2 lediglich durch den Kanal 843 getrennt sind, und wie nachstehend beschrieben geschattet werden können:

In dem Kanal 843 ist eine Flüssigkeit F mit geeignetem Brechungsindex eingebracht, der im wesentlichem dem Brechungsindex der Lichtwellenleiter 86, 87 und 86', 87' entspricht: Resultat ist daß der Lichteingang 82 mit beiden Lichtausgängen 82' und 83' verbunden ist.

In dem Kanal 843 ist eine Flüssigkeit F oder ein Gas mit geeignetem Brechungsindex eingebracht, der deutlich von dem Brechungsindex der Lichtwellenleiter 87 und 87' abweicht: Resultat ist ein erster und zweiter voneinander entkoppelter Lichtweg mit erstem Eingang 82 und ersten Ausgang 82' bzw. mit zweitem Eingang 83 und zweitem Ausgang 83'.

Als logischer Schalter hier abgekürzt mit TYP3 kann die elfte Ausführung beschrieben werden mit dem Gleichungssystem:

$$E1 \rightarrow A1 \text{ UND } E2 \rightarrow A2$$

$$E1 \rightarrow (A1 \text{ UND } A2) \text{ UND } E2 \rightarrow (A1 \text{ UND } A2)$$

Hierbei bedeutet abgekürzt:

E1: Eingang1, 82
E1: Eingang1, 83
A1: Ausgang1, 82
A2: Ausgang2, 83'

Der erfindungsgemäße optische Schalter 12 weist in seinen übrigen Merkmalen die gleichen Vorteile auf wie die vorstehend beschriebenen optischen Schalter 5 bis 10 und es wird daher diesbezüglich auf das vorstehend Gesagte verwiesen.

Dreizehnte Ausführung:

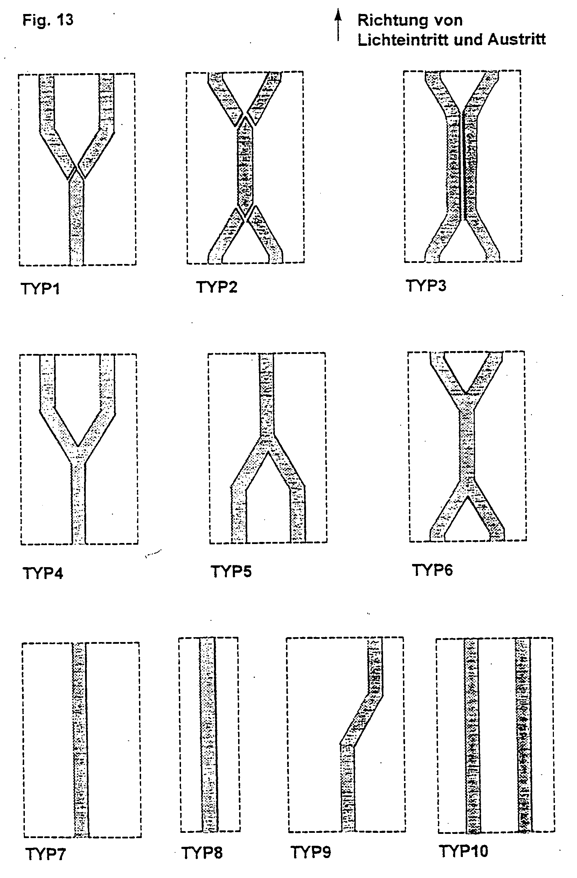

Fig. 13 zeigt ein erfindungsgemäßes modulares System zum Aufbau von optischen Schaltsystemen bestehend aus den vorstehend beschriebenen Grundschaltelementen TYP1 und TYP2 und vorteilhaft außerdem bestehend aus dem Grundschaltelement TYP3 und vorteilhaft außerdem bestehend aus den monofunktionalen Grundschaltelementen TYP4 und TYP5 und vorteilhaft bestehend aus weiteren monofunktionalen Elementen TYP6, TYP7, TYP8, TYP9 und TYP10.

Die Grundschaltelemente TYP1 bis TYP10 (In der Zeichnung lediglich schematischsymbolhaft dargestellt) sind erfindungsgemäß in ihren Abmessungen aufeinander abgestimmt, so daß sie auf einfache Weise miteinander kombiniert werden können:

Erfindungsgemäß bestehen alle Elemente aus im wesentlichen planaren Lichtwellenleitern mit wenigstens einem Lichteingang E1 und wenigstens einem Lichtausgang A1, die derart angeordnet sind, daß Lichteingang und Lichtausgang im wesentlichen parallel in einer Ebene angeordnet sind.

Im einzelnen ermöglichen die Grundschaltelemente TYP1 bis TYP10 die nachstehenden Funktionen:

TYP1: Ein Eingang und zwei Ausgänge Schaltung: E1$\rightarrow$ A1 ODER A2
TYP2: Zwei Eingänge und zwei Ausgänge Schaltung: E1$\rightarrow$ (A1 ODER A2) UND E2 = AUS
          E2$\rightarrow$ (A1 ODER A2) UND E1 = AUS
TYP3: Zwei Eingänge und zwei Ausgänge Schaltung: E1$\rightarrow$ A1 UND E2 $\rightarrow$ A2
          E1$\rightarrow$ (A1 UND A2) UND E2 $\rightarrow$ (A1 UND A2)
TYP4: Ein Eingang und zwei Ausgänge, monofunktional Schaltung: E1 $\rightarrow$ A1 UND A2
TYP5: Zwei Eingänge und ein Ausgang, monofunktional Schaltung: E1$\rightarrow$ A1 UND E2 $\rightarrow$ A1
TYP6: Zwei Eingänge und zwei Ausgänge, monofunktional Schaltung: (E1 $\rightarrow$ A1 UND A2) UND (E2 $\rightarrow$ A1 UND A2)
TYP7: Ein Eingang und ein Ausgang, monofunktional Schaltung: E1 $\rightarrow$ A1

TYP8: Ein Eingang und ein Ausgang, monofunktional Schaltung: E1 $\rightarrow$ A1
TYP9: Ein Eingang und ein Ausgang, monofunktional Schaltung: E1 $\rightarrow$ A1, (lateraler Versatz von E1 und A1)
TYP10: Zwei Eingänge und zwei Ausgänge, monofunktional Schaltung: E1 $\rightarrow$ A1 UND E2$\rightarrow$ A2

Mit E1, E2, A1, A2 sind hier Eingang 1, Eingang2, Ausgang1 und Ausgang2 abgekürzt und "$\rightarrow$" bedeutet "verbunden mit".

Bei der industriellen Fertigung können unter Anwendung bekannter Mikrostrukturverfahren die erfindungsgemäßen modularen Bauelemente TYP1 bis TYP10 im Batch-Betrieb in großer Anzahl kostengünstig hergestellt werden, und anschließend mittels geeigneter Auswahl und Kombination der vorgefertigten Bauelemente zu einer Schaltung mit vorbestimmter Schaltfunktion zusammengesetzt werden.

Besonders vorteilhaft kann auch das erfindungsgemäße modulare System bestehend aus wenigstens den Grund-Bauelementen TYP1 und TYP2 Bestandteil eines Datenverarbeitungsprogramms zur Steuerung einer Anlage zur Produktion der einzelnen Bauelemente oder komplexer Schaltungsanordnungen in Chip-Bauweise auch im Batch-Betrieb sein. Die Grund-Bauelemente TYP1 und TYP2, vorteilhaft außerdem TYP3, vorteilhaft außerdem die Bauelemente TYP4, TYP5 und TYP6, vorteilhaft außerdem die Bauelemente TYP7, TYP8. TYP9, TYP10, sind in diesem Fall erfindungsgemäß als virtuelle Bauelemente Bestandteil eines Datenverarbeitungsprogramms, das vorteilhaft sowohl das Design komplexer optischer Schaltungen vorgibt und optimiert, als auch deren anschließende automatisierte Produktion steuert.

Fig. 13 zeigt beispielhaft eine Schaltung mittels der die Lichteingänge E1 bis E10 wahlweise mit einem der Lichtausgänge A1 bis A10 verbunden werden können, und die mittels einer geeigneten Anordnung der Grundschaltelemente TYP2 und TYP8 bereitgestellt ist.

Das Substrat besteht bei allen vorstehend beschriebenen Ausführungen eins bis dreizehn geeigneterweise aus einem Material mit vorzugsweise hydrophoben Eigenschaften.

**Patentansprüche**

1.   Optisches Bauelement bestehend aus:
   einem Grundkörper (2) aus einem lichtdurchlässigen Material mit einem ersten Hohlraum (20),
   der eine erste (21) und eine zweite (22) Seitenwand aufweist, und einem zweiten Hohlraum (201) in Verbindung mit dem ersten Hohlraum (20), wobei der zweite Hohlraum (201) als ein Reservoir für eine Flüssigkeit (F) dient, die einen Brechungsindex aufweist, der im wesentlichen identisch ist mit dem Brechungsindex des Grundkörpers (2) ist;
   Fördermittel (24), um die Flüssigkeit (F) von dem zweiten Hohlraum (201) in den ersten Hohlraum (20) und aus dem ersten Hohlraum (20) zurück in den zweiten Hohlraum (201) zu befördern, **dadurch gekennzeichnet, daß**

   -   eine Fresnel-Linsen-Struktur (202) in einer der Seitenwände (21, 22) ausgebildet ist, so daß, wenn die Flüssigkeit (F) in den ersten Hohlraum (20) befördert wird, ein Lichstrahl, der in den Grundkörper (2) geleitet wird, den ersten Hohlraum (20) und den Grundkörper (2) durchtritt, als wenn es sich um eine dicke homogene Platte handelt; und
   -   wenn die Flüssigkeit (F) aus dem ersten Hohlraum (20) in den zweiten Hohlraum (201) zurückgeführt ist, der Lichtstrahl durch die Linse moduliert wird.

2.   Optisches Bauelement nach Anspruch 11, wobei die erste (21) und zweite (22) Seitenwand des ersten Hohlraums (20) im wesentlichen parallel verlaufen.

3.   Optisches Bauelement nach Anspruch 11 oder 12, wobei der erste Hohlraum (20) eine längliche Gestalt besitzt, und das eine offene Ende des ersten Hohlraums (20) an den zweiten Hohlraum (201) anschließt, dessen Längsschnitt vergrößert ist, und der als Flüssigkeitsreservoir dient.

4.   Optisches Bauelement nach einem der Ansprüche 11 bis 13, wobei das Fördermittel (24) ein piezoelektrischer Aktor (24) ist.

5.   Optisches Bauelement nach einem der Ansprüche 11 bis 14, wobei der erste (20) und zweite (201) Hohlraum und der piezoelektrische Aktor (24) derart dimensioniert sind, daß die Flüssigkeit (F) im Zusammenwirken mit der Ausbildung des ersten (20) und des zweiten (201) Hohlraumes als fluidier Wegverstärker wirkt.

6.   Optisches Bauelement nach einem der Ansprüche 11 bis 15, wobei der Grundkörper (2) aus Kunststoff ausgebildet ist.

7.   Optisches Bauelement nach einem der Ansprüche 11 bis 16, wobei das Bauelement derart ausgebildet und strukturiert ist, daß es hochfrequent geschaltet werden kann.

Fig. 1a

Fig. 1b

Fig. 2a

Fig. 2b

2

20

21

202

F

201

22

24

2

20

21

202

22

F

201

24

Fig. 3a

Fig. 3b

Fig. 4a

Fig. 4b

Fig. 5a

Fig. 5b

Fig. 6a

Fig. 6b

Fig. 7a

Fig. 7b

Fig. 7c

701     731    74

75

71

70

Fig 7d

701     731    74

75

71

70

Fig. 7e

EP 1 477 839 A2

**Fig. 8a**

**Fig. 8b**

**Fig. 9**

**Fig. 10a**

**Fig. 10b**

Fig. 11

Fig. 12

**Fig. 13**

Richtung von
Lichteintritt und Austritt

TYP1

TYP2

TYP3

TYP4

TYP5

TYP6

TYP7

TYP8

TYP9

TYP10

Fig. 14    A1  A2  A3  A4  A5  A6  A7  A8  A9  A10

→ TYP2

→ TYP8

E1  E2  E3  E4  E5  E6  E7  E8  E9  E10